# EUROPEAN PATENT SPECIFICATION

(11) **EP 1 124 200 B1**
(45) Date of publication and mention of the grant of the patent: **26.09.2007**
(21) Application number: 01100978.4
(22) Date of filing: 17.01.2001
(51) Int. Cl.: G06T 11/60

(54) **Methods and apparatuses for generating composite images**
Verfahren und Vorrichtung zur Erzeugung von gemischten Bildern
Procédé et appareil pour la génération d'images composites

(30) Priority: 18.01.2000 US 176956 P
(43) Date of publication of application: 16.08.2001
(73) Proprietor: Branders.com, Inc., Foster City, California, 94404 (US)
(72) Inventor: Lunetta, Larry, Sunnyvale, CA 94087 (US); Jones, Elliott, Menlo Park, CA 94025 (US)
(74) Representative: Liesegang, Eva

(56) References cited:
- WO-A-98/08176
- US-A- 4 796 201
- US-A- 4 873 643
- US-A- 5 930 810
- ANONYMOUS: "Adobe Photoshop 5.0 User Guide for Macintosh and Windows" ADOBE PHOTOSHOP 5.0 USER GUIDE, XX, XX, no. 90011345, 1998, pages i-ii,13, XP002235802
- HECKBERT P S: "SURVEY OF TEXTURE MAPPING" IEEE COMPUTER GRAPHICS AND APPLICATIONS, IEEE INC. NEW YORK, US, vol. 6, no. 11, 1 November 1986 (1986-11-01), pages 56-67, XP000002233 ISSN: 0272-1716

## Description

### FIELD OF THE INVENTION

The present invention relates to the field of computer-generated images. Particularly, the present invention relates to the generation of composite images at a server utilizing image selections communicated via a Web browser over a network, such as the Internet.

### BACKGROUND OF THE INVENTION

US 5, 930,810 discloses a printing system which allows the creation of several types of printing documents such as business and greeting cards, stationery and slides. In addition, the product may also be physical objects such as shirts, baseball caps, personalized plaques, and trophies. The document describes a what you see is what you get display of the selected product and the changes made by the user to changeable aspects of the selected product. The document further describes a client/server implementation which enables the storage at a single side of graphics, background, and the like for use by a number of client computers. Thus, changes to the files may be made at a central location.

Heckbert P. S. : "Survey of texture mapping" IEEE Computer Graphics and Applications, vol. 6, no. 11, pages 56-67, describes methods of texture mapping for creating the appearance of complexity of an image without the tedium of modeling and rendering every 3D detail of a surface.

The sale of promotional products, also called advertising specialties, has traditionally been practiced as a broker-customer relationship where a commissioned broker presents, in-person, various product lines and decoration choices to a customer. For example, a customer may call a broker in regard to promoting their company at a client appreciation golf tournament. The broker presents the customer with various products, i.e., hats, shirts, mugs, etc., that can be decorated using selected decorative technologies, i.e., embroidery, silk-screening, etc. For example, the customer may select a green polo shirt with the intention that it be decorated with company logo, graphic, name or other text or symbol be in black embroidery above the shirt pocket. The broker then facilitates the coordination among the customer, product vendor, and decorators to supply the requested customized product by the time required by the customer.

Due to the large number of product manufacturers and decorators, the broker usually carries a selected product line from various manufacturers and utilizes a selected group of decorators to apply the necessary decoration to the product. The customer, therefore, is presented a limited group of products and options for decorating the product. Moreover, when choosing the product, the customer generally is looking at catalog images or samples that are blank - that is, undecorated or decorated with the design of another company. In these cases, the customer is left to imagine the appearance of the decorated product until after placing an order. Thus, typically, the customer usually does not see the final product until it arrives. Furthermore, until the product arrives, the customer must depend upon the broker to ensure the order is delivered on time and appears as was anticipated.

Thus, it would be desirable for a client to be able to select a product and a decoration at their convenience over a network, for example, the Internet, and to view the appearance of the final product.

### SUMMARY OF THE INVENTION

The present invention provides a method of generating a composite image according to claim 1 and a corresponding apparatus according to claim 26.

The present invention discloses methods and apparatuses for generating composite images via a network. In one embodiment, a first image is selected via a Web interface presented on a browser. A second image is selected via a Web interface presented on the browser. The selection of the first image and the second image is communicated to a server via the network. The server generates a composite image of the first image and the second image and communicates the composite image to the browser via the network.

### BRIEF DESCRIPTION OF THE DRAWINGS

The present invention is illustrated by way of example and not limitation in the figures of the accompanying drawings, in which like references indicate similar elements and in which:
FIGURE 1 is a diagram of a system architecture according to one embodiment of the present invention;
FIGURE 2 is a flow diagram illustrating a product image processing according to one embodiment of the present invention;
FIGURE 3 is a flow diagram illustrating server side processes and client side processes utilized in generating a composite image according to one embodiment of the present invention;
FIGURE 4 is a Web interface presented on a browser that presents product details according to one embodiment of the present invention;
FIGURE 5 is illustrating a product image file structure according to one embodiment of the present invention;
FIGURE 6 is a Web interface presented on the browser that enables selection of a decorative image according to one embodiment of the present invention;
FIGURE 7 is a flow diagram illustrating a process of uploading the decorative image to a server according to one embodiment of the present invention;
FIGURE 8 is a Web interface presented on the browser that presents a default composite image according to one embodiment of the present invention;
FIGURE 9 is a Web interface presented on the browser that presents a composite image generated according to a warp ratio according to one embodiment of the present invention;
FIGURE 10 is a Web interface presented on the browser that enables positioning of the logo image relative to a product image according to one embodiment of the present invention;
FIGURE 11 is a flow diagram illustrating a process of relative positioning of the logo image;
FIGURE 12 is a Web interface presented on the browser that presents a quote according to one embodiment of the present invention;
FIGURE 13 is an example of a traditional client - server system upon which one embodiment of the present invention may be implemented.

### DETAILED DESCRIPTION

Although the present invention is described below by way of various embodiments that include specific structures and methods, embodiments that include alternative structures and methods may be employed without departing from the principles of the invention described herein.

In general, embodiments described below feature a network-based application that prompts a user for a product image selection and a decorative image selection and displays a product image (e.g., a photograph) with the decorative image (e.g., a logo graphic or text graphic) placed on it. A preferred embodiment of the present invention features a network-based application for composite image generation. For the purposes of the present specification, the term "product image" shall be taken to include any image type and may depict any type, shape or construction of product. The term "decorative image" shall also be taken to include any image type, and may depict, for example, any logo, text, pattern, ornamentation, name, symbol, emblem or the like that may be applied to a product.

In one embodiment, the present invention is implemented as a computer-based service that may be accessed through the Internet, for example, using a Web browser. The service provides an interface that allows a user to select a product and select and/or create decorative image information and view the composite image before ordering the promotional product.

### Internet-related technology

As indicated above, one embodiment of the present invention provides an Internet-based implementation. Accordingly, some introduction to Intemet-related technology is helpful in understanding the present invention. The Internet is a vast and expanding network of computers and other devices linked together by various telecommunications media, enabling the various components to exchange and share data. Sites (so-called Web sites), accessible through Internet, provide information about numerous corporations and products, as well as education, research, entertainment and services.

A resource that is attached to the Internet is often referred to as a "host." Examples of such resources include conventional computer systems that are made up of one or more processors, associated memory and other storage devices and peripherals, such as modems, networks interfaces and the like that allow for connection to the Internet or other networks. In most cases, the hosting resource may be embodied as hardware and/or software components of a server or other computer system that includes an interface module, which allows for some dialog with users and that may process information through the submission of Web forms completed by the user. Generally, such a server will be accessed through the Internet's graphical user interface, the World Wide Web, (e.g., via Web browsers) in the conventional fashion.

In order to facilitate communications between hosts, each host has a numerical Internet Protocol (IP) address. The IP address of a hypothetical host computer might be 112.222.64.27. Each host also has a unique "fully qualified domain name." In the case of the hypothetical host 112.222.64.27, the "fully qualified domain name" might be "computer.domain.com", the three elements of which are the hostnanie ("computer"), a domain name ("domain") and a top-level domain ("com"). A given host looks up the IP address of other hosts on the Internet through a system known as domain name service.

As previously indicated, in order to access the Internet most users rely on computer programs known as "Web browsers." Commercially available Web browsers include such well-known programs as Netscape's Navigator^{™} and Communicator^{™} and Microsoft's Internet Explorer^{™}. If an Internet user desires to establish a connection with a Web page hosted at computer.domain.com, the Internet user might enter into a Web browser program the uniform resource locator (URL) "http://www.domain.com". The first element of the URL is a transfer protocol, most commonly "http" standing for hypertext transfer protocol, but others include "mailto" for electronic mail, "ftp" for file transfer protocol, and "nntp" for network news transfer protocol. The remaining elements of this URL are an alias for the fully qualified domain name of the host.

Once a URL is entered into the browser, the corresponding IP address is looked up in a process facilitated by a certain computer, called the top-level server. The top-level server matches the domain name to an IP address of a domain name server capable of directing the inquiry to the computer hosting the Web page. Thus, the domain name server ultimately matches an alphanumeric name such as www.domain.com with its numeric IP address 112.222.64.27.

When a host receives an inquiry from the Internet, it returns the data in the file pointed to by the request to the computer making the inquiry. Such data may make up a Web page, which may include a textual message, sound, picture, or a combination of such elements. A user can move between Web pages through the use of hyperlinks, which are links from one site on the Internet to another.

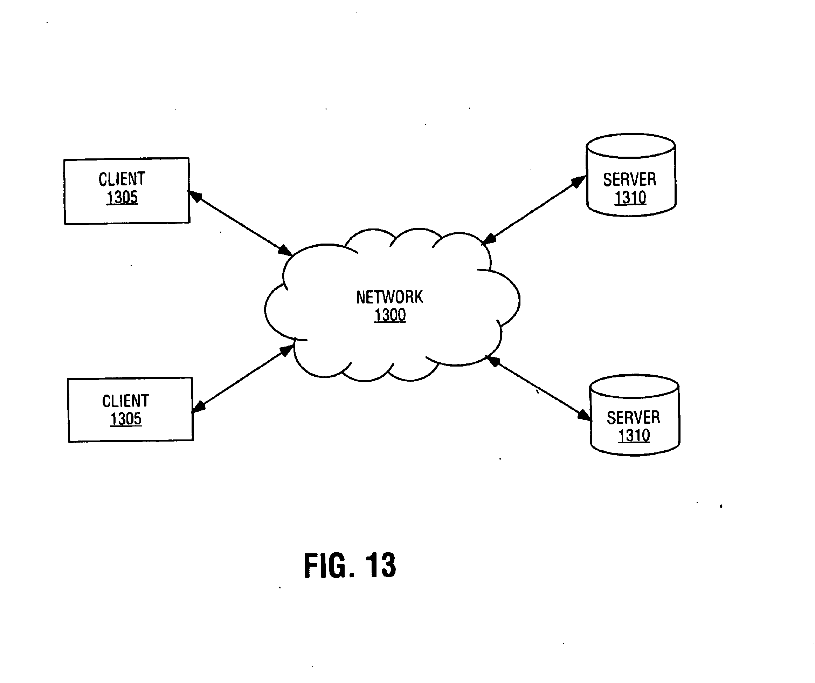

An integral component of the present invention is a computer server. Servers are computer programs that provide some service to other programs, called clients. A client 1305 and server 1310 of Figure 13 communicate by means of message passing often over a network 1300, and use some protocol, a set of formal rules describing how to transmit data, to encode the client's requests and/or responses and the server's responses and/or requests. The server may run continually waiting for client's requests and/or responses to arrive or it may be invoked by some higher-level continually running server that controls a number of specific servers. Client-server communication is analogous to a customer (client) sending an order (request) on an order form to a supplier (server) dispatching the goods and an invoice (response). The order form and invoice are part of the protocol used to communicate in this case.

Another component of the present invention is an alpha channel. An alpha channel is a portion of each pixel's data that is reserved for transparency information. Pixel is the smallest addressable unit on a display screen. Typically, the alpha channel is defined on a per object basis; different parts of the object have different levels of transparency depending on how much background needs to show through. In short, the alpha channel is a mask that specifies how the pixel's colors should be merged with another pixel when the two are overlaid, one on top of the other.

### Architecture

With these concepts in mind, an embodiment of a system architecture of the present invention can be explored. A composite image generation service may be accessed through client machines 100 that run browser applications 105 to provide graphical interfaces for a user to effectively use the composite image generation service. The client machines 100 communicate with a server machine 120 via a network 110, e.g. Internet. The server machine 120 includes such components of the present invention as a web server 130, application sever 140 and database server 150. It will be appreciated that these servers may run on other machines that are accessible by the server machine 120. In an embodiment of the present invention, databases for storing customer information, product image information, decorative image information, etc. are also stored at the server machine 120. However, it will be appreciated that databases may be stored at other machines and database data may be uploaded to the server machine 120 when necessary.

The application server 140 contains visualization server 150 that includes compositing engine 160, product image conversion engine 170 and artwork creation engine 180. Compositing engine 160 generates a composite image based on a first image and a second image selected by a user. A first image is, for example, uploaded by a manufacturer of a product depicted in the first image and processed by the product image conversion engine 170 for storage in a photo archive database 240.

Of course, the first image may be obtained from the any number of sources. For example, an operator of a Web site that is it supported by the server machine 120 may employ an internal photographic (or art) department that is responsible for generating images of products that are supplied, together with pertinent product information, to the Web site operator by manufacturers of such products. These internally generated photographs may be stored in a photograph archive database 260.

The second image is modified by the artwork creation engine 180 according to the user's operations in the Web browser. These image conversion processes are described in detail below. The database server 190 that communicates to the application server 140 contains databases 191 used for the composite image generation. As stated above the databases may be stored at another machine and accessed by the database server 190. Furthermore, the database server 190 may run at another machine and communicate with the application server 140 via the network 110.

### Methodology and User Interface

With these concepts in mind, an embodiment of the present invention can be further explored. In order to produce a composite image, the first and the second images, for example product image and logo image respectively, must be processed for use by the compositing engine 160 of the visualization server 150. While the below exemplary embodiment of the present invention is described as utilizing "logo images", it will be appreciated that the present invention is not limited to the utilization of such logo images, and may employ a decorative image representing any decoration (e.g., a graphic, logo or text) that may be applied to product.

Before a product image and a logo image can be utilized by the composite image generator, in one embodiment, each is formatted as a raster file. It will be appreciated that the processing of the photo image need not occur at the server and may take place at another location with the processed product images that may be, for example, uploaded to the server via a network or generated by a Web site operator that operates the server machine 120.

In one embodiment of the present invention, a product image file is submitted by a manufacturer. For example, the product manufacturer submits a high-resolution product photo file, such as a file of 1.3 mega-pixel resolution.

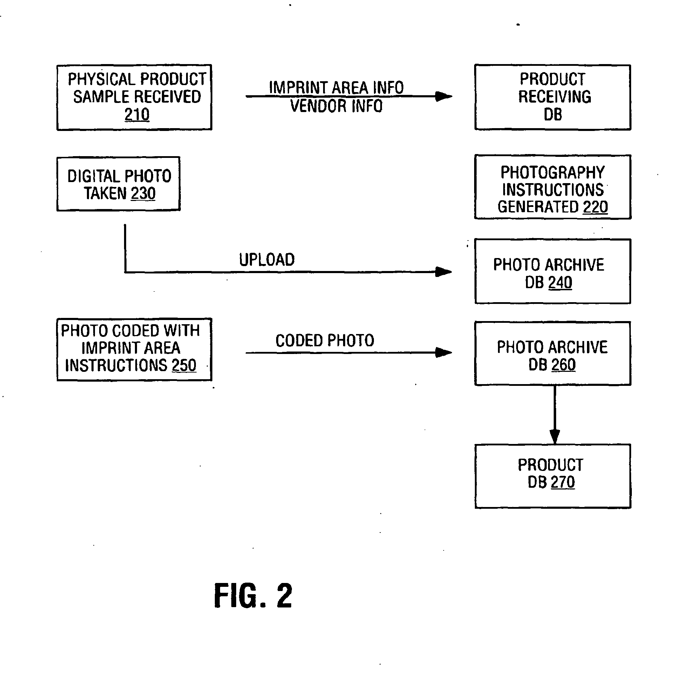

In another embodiment of the present invention the manufacturer may submit a physical product sample at 210 of Figure 2 with the product information, including size, imprint area, etc., that is stored in product receiving database by the compositing engine 160. Upon generation of photography instructions at 220, the digital photograph of the product is taken at 230 by, for example, a Web site operator that operates the server machine 120. The digital photograph is then uploaded to photo archive database 260. The coded photo with imprint area instructions in the header of a product image file is stored in product database 270.

In one embodiment, the product image processing may be done utilizing a commercially available software package, such as Adobe Photoshop^{™} (available from Adobe Systems of San Jose, California) on Windows^{™} operating system (available from Microsoft Corporation of Redmond, Washington). An alpha channel is defined using the selection tools in Photoshop^{™}, and, at the same time, the diameter of the product is set and the warp ratio is automatically calculated based on the diameter of the product. The product photo export plug-in generates the product image file and product thumbnail file and saves it in the product image database, or saves it for uploading to the product image database by the product image conversion engine 170. In one embodiment, the product image database may be part of a product database where the product images are associated with a product; however, in other embodiments it may be a separate product image database associated with a product database. In an embodiment where the product images are processed at another system, the processed files are uploaded to the product image database. The product image file may be a .png file containing a high-resolution product image. It will be appreciated that product image files in addition to or other than the above image files may also be generated by the product photo export plug-in.

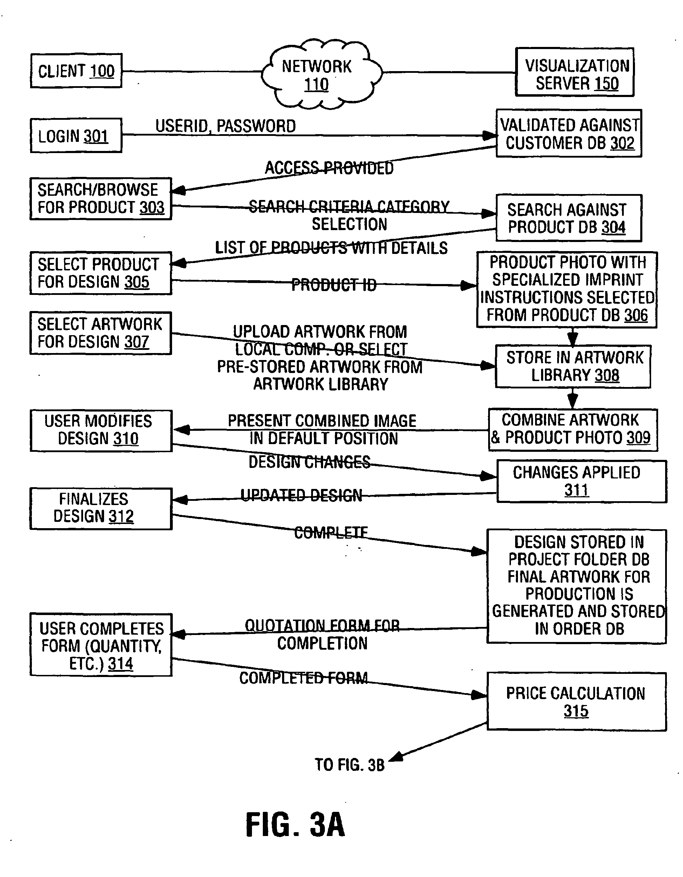

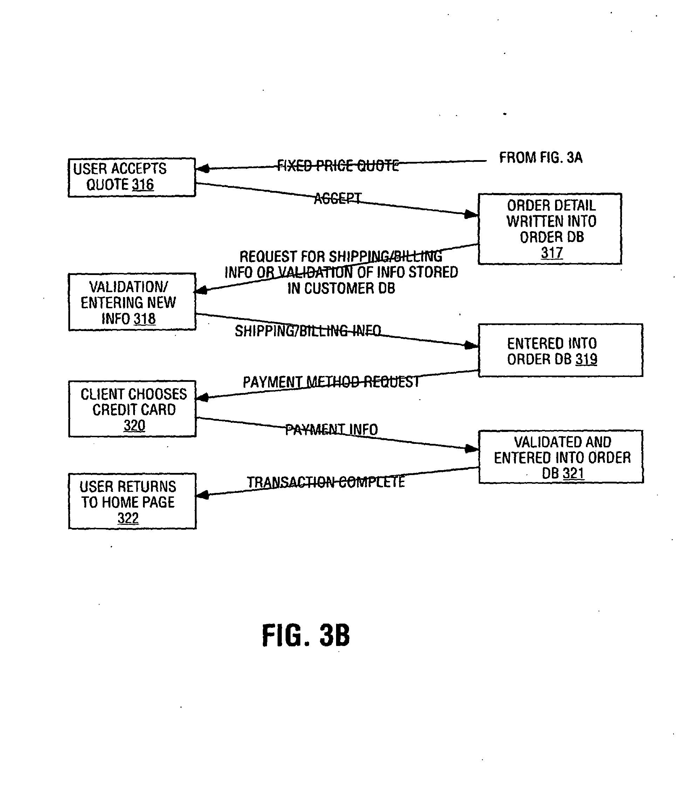

The next embodiment of the present invention is described with reference to a simplified flow diagram Figure 3. At operation 301, a customer on a client system 100 accesses the visualization server 150 via a network 110 (e.g., Internet), utilizing a network browser. The customer is presented on the browser with a Web interface (e.g., HTML document) communicated from the visualization server 150, and prompting the customer to enter a user identification (userid) and password in order to use the composite image generation service. First time users are prompted to enter customer information, e.g. name, address, phone number, billing address, payment information and are assigned a userid and password that are user-modifiable. Upon entering a userid and a password, the information is sent to the visualization server 150, where validation of the entered information is done against a customer database containing all the relevant customer information. Upon successful validation access to the composite image generation service is provided to the user at operation 302.

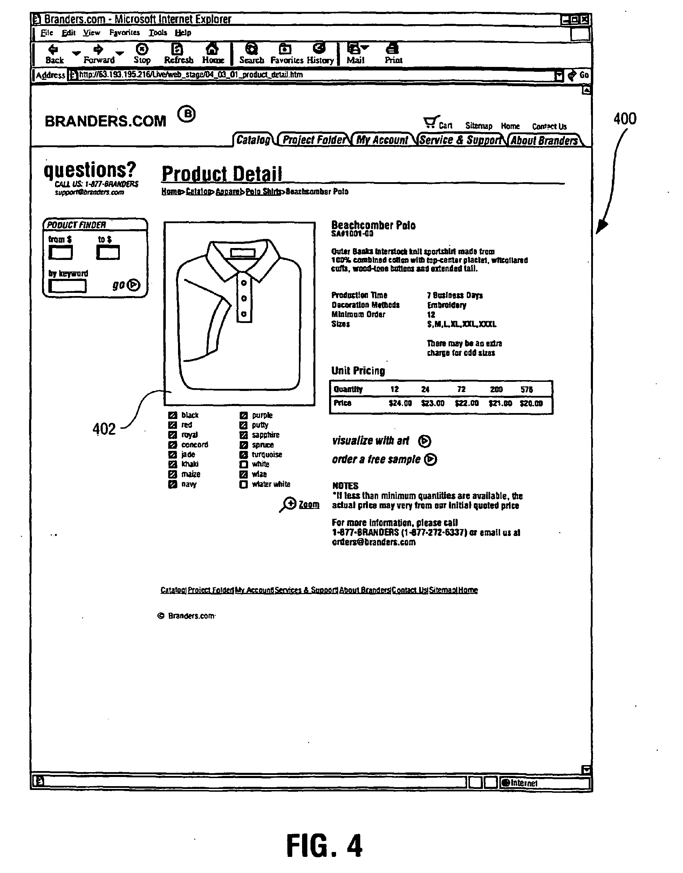

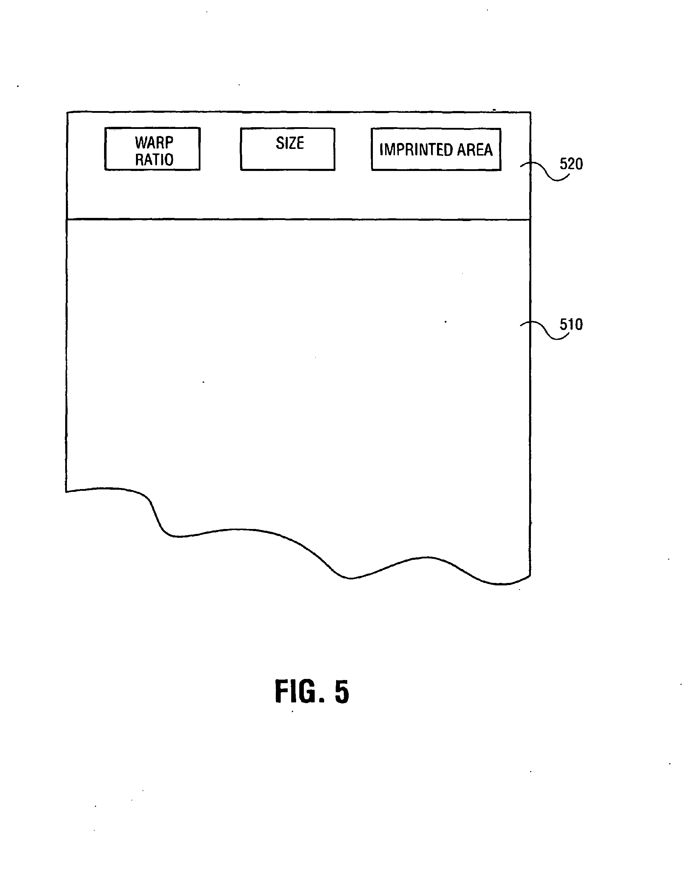

At operation 303 the user may browse a virtual product catalog or search for a specific product. If the user selects a search option then the visualization server 150, upon getting a search request, conducts a search for a product against a product database that may be stored on the server machine 120 or on another machine that is accessible by the visualization server 150. The user is presented with a list of all the products stored in the database or the list of products identified by the visualization server 150 as the result of a specific product search, along with thumbnail image of each product next to its name. Upon clicking on a thumbnail image the user may be presented with the enlarged photograph 402 of a product with the detailed description. An exemplary user interface 400 to present the enlarged photograph 402 is shown in Figure 4. At this point 305 the user may select a product for design. A unique product identification number gets sent to the visualization server 150, which allows the server to select the correct product photo with the specialized imprint instructions from the product database. In one embodiment of the invention each product image may be stored in a file 510 with the header 520 containing information about the image, such as size, imprint area, warp ratio, etc., as illustrated in Figure 5. It will be appreciated that the selected product image is maintained as an image file accessible at the server machine 120 and may reside as an image file in a separate product image database or may reside as an image file in part of a larger database, such as the product database.

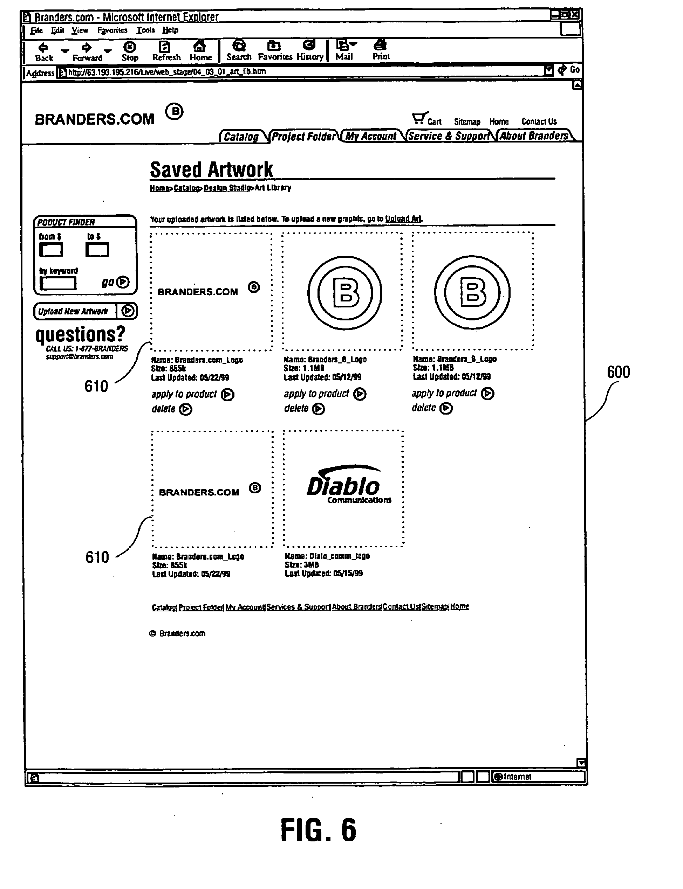

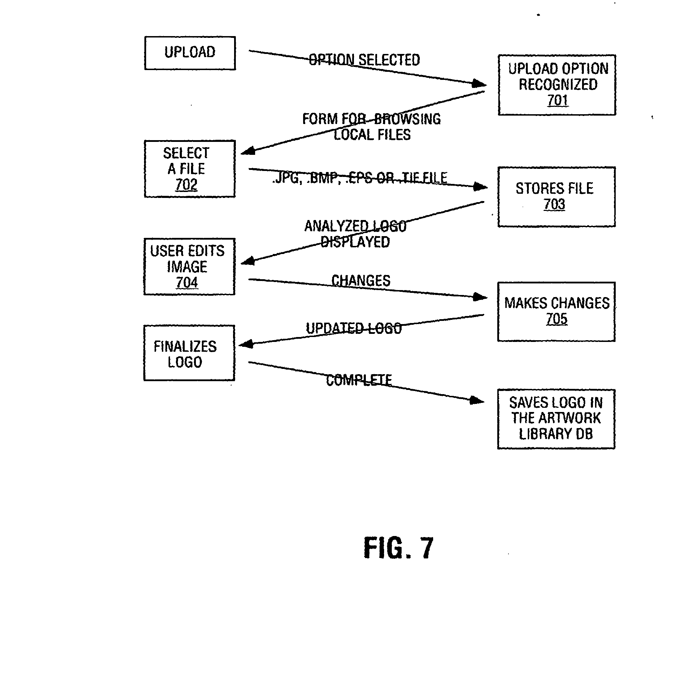

After selecting a product for design, the user may select the second image, at operation 307, which may be artwork, such as a logo. It is customary for businesses to have several versions of a company's logo, these versions can be stored in the customer database, and upon customer login may be transferred to a Web browser for display. An exemplary user interface 600 to present user's logos 610 is shown in Figure 6. In an alternative, the user may upload a logo from the client to the visualization server 150 through operations illustrated in Figure 7. At 701 upon user's selection of upload option the user is presented with a form for browsing files stored at the local computer. At operation 702 the user selects a file that may be a .jpg, .bmp, .eps, or .tif and uploads it to the visualization server 150 where the number of colors and transparent area are detected by the artwork creation engine 180. The visualization server 150 displays the analyzed logo on the Web browser on a specialized background, at operation 703. At this point 704, the user may edit artwork transparency areas and submit changes to the visualization server 150. The server then, at 705, re-displays the logo with the changes on the Web browser. Upon satisfaction with the logo the user may save the logo and associated data in an artwork library database at the visualization server 150.

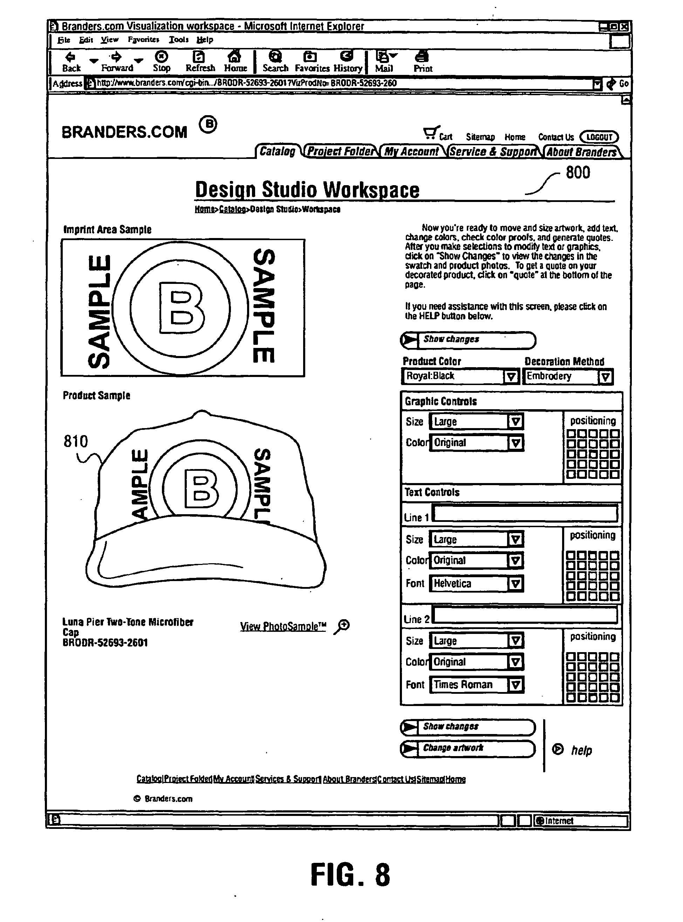

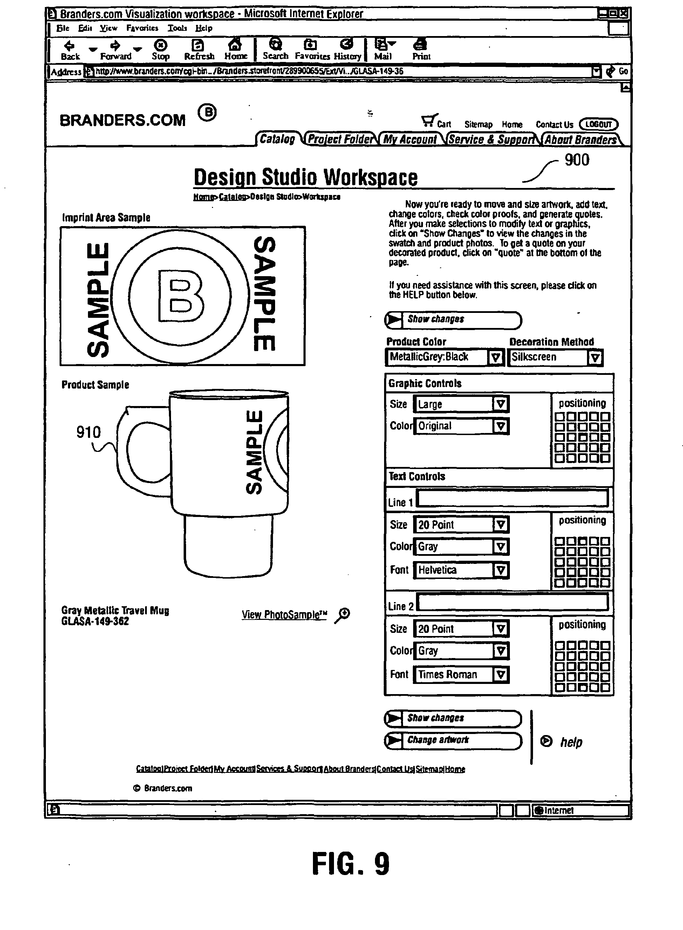

Returning to Figure 3, when the user finalizes the product choice and logo selection the server communicates the composite image to the browser via the network, illustrated as operation 309 of Figure 3, and the composite image of the product and the logo is displayed at the Web browser, where the logo is placed in a default position on the product, e.g. the logo will be placed in the center of a baseball cap as a default. An exemplary user interface 800 to present a default composite image 810 is shown in Figure 8. Necessary warping is applied by the composite engine 160 when generating default composite image. The product image file selected by the user contains warping information, e.g. warp ratio, in the header of the file. The composite engine 160 places the logo image on the product image according to the warp ratio. An exemplary user interface 900 to present a composite image 910 containing warping is shown in Figure 9. The warping may be cylindrical or spherical, however, it will be appreciated that the warping ratio may be further defined to address other types of product image topography, e.g. undulating, cubist, etc.

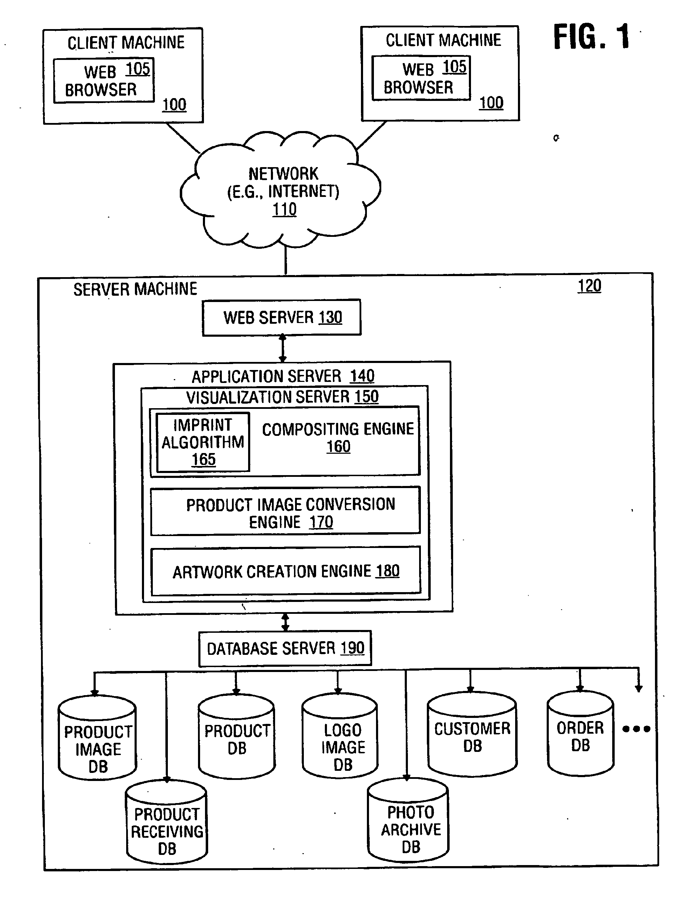

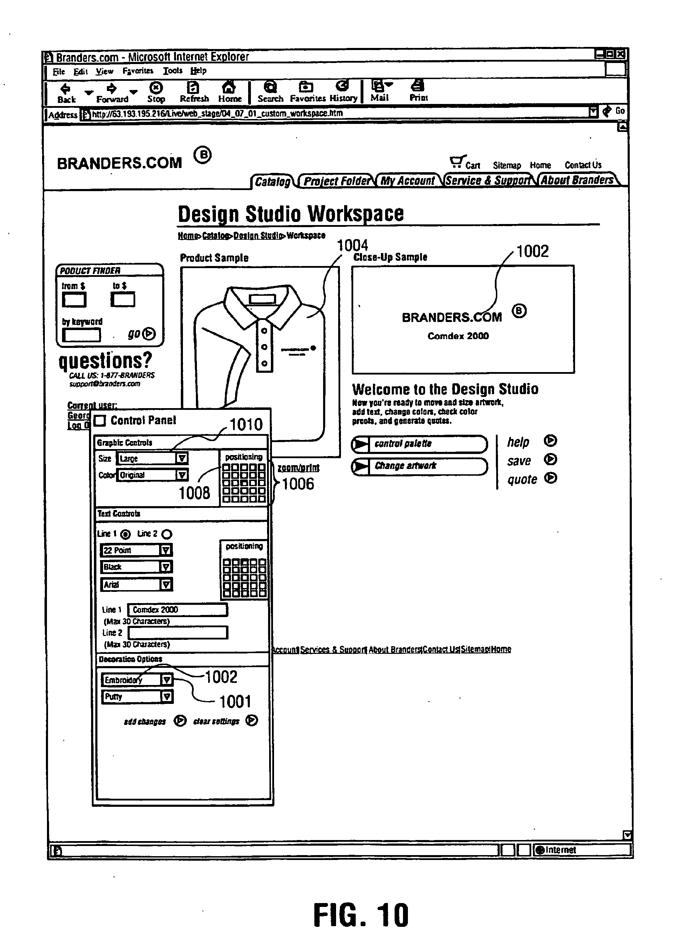

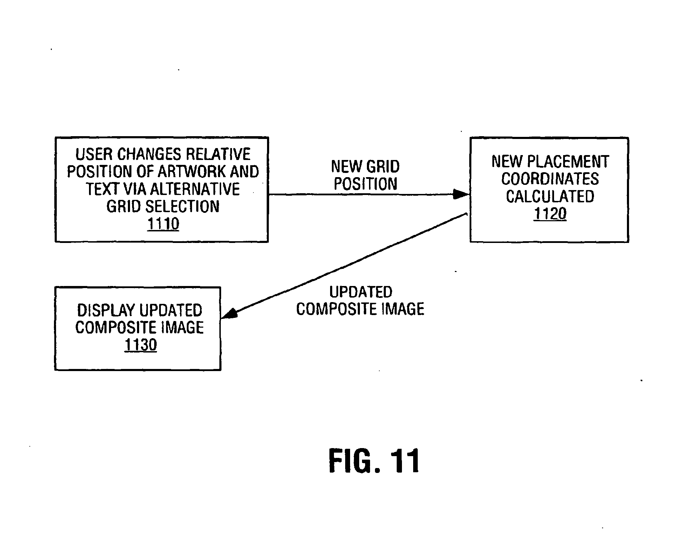

However, the user is not limited by the default composite image. In one embodiment, the user can selectively position a logo image relative to the product image by selecting a position on a positioning grid 1006 presented, at 1110 of Figure 11, via a Web interface on the browser, as illustrated in exemplary user interface of Figure 10. For example, the user may select block 1008 in positioning grid 1006 by navigating a cursor over block 1008 and clicking on it. The selecting of block 1008 generates positioning information that is communicated to the visualization server. Upon the user changing relative position of artwork and text, new placement coordinates are calculated by the visualization server 150 based on the grid selection, size of the artwork and text and imprint area at 1120 of Figure 11. This method would be best described by the following example. Let the grid be 5 blocks by 5 blocks, as illustrated in Figure 10. The imprint algorithm 165 of Figure 1 divides the imprint area by 5 and performs relative positioning upon the user selecting grid blocks. For example, if an imprint area is a 1-inch rectangle then a change by one block is 2/10 of an inch move. The changes are being sent to the visualization server 150, where the image 1004 is being re-composited and redisplayed on the screen at 1130 of Figure 11.

In addition, the visualization server 150 makes some assumptions about the size of the logo when generating the default composite image, and the user is given an option to modify it. The user may be presented with a drop down menu 1010, where the user may select the desired size by selecting and clicking on a small, medium or large option. Upon receiving the request the visualization server 150 re-sizes the image, re-composites the image and re-displays it on the Web browser. For example, if the user wants the logo to be of a small size, the visualization server 150 may re-size the logo to a 33% of an original logo image.

Figure 10 illustrates an example of a Web interface presented on a browser that allows the user at the client side to select a manufacturing process filter to use in generating a composite image. In one embodiment, the user is presented a selection of filters via a Web interface presented on the browser. For example, the user may be presented a display of manufacturing techniques or processes in a selection box 1001. For example, the selection box may display a drop down menu of options for selection by the user. The user may then select a filter 1002, for example, by scrolling down the drop down box and clicking on a selected filter. The selection of the filter generates filtering information that is communicated to the visualization server 150. This filtering information is used in generating the composite image so that the logo appears applied to the product image according to the selected filter, i.e., embroidery, silk-screening, engraving, etc. This technique is accomplished by the usage of filters that are well known in the art.

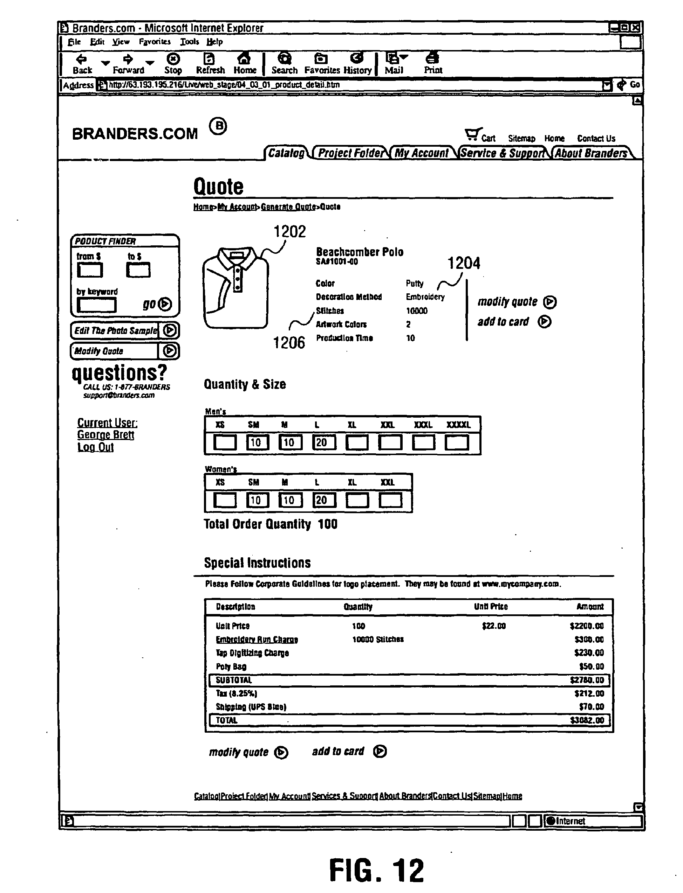

Upon completion of operation 312 of Figure 3, the design is stored in a project folder database at the visualization server 150 and final artwork for production is generated and stored in an order database at 313. The user is then presented with a quotation form, illustrated in Figure 12, where such information as quantity, color, decoration process, special instructions from the customer, etc. needs to be filled out. Upon the user completing the form the visualization server 150 calculates the price for the order at operation 315 of Figure 3. The price of the promotional product with the imprinted logo depends on the methods of manufacturing. For example, if imprint is done by the method of embroidery then the number of stitches determines the price of the order. When the final design is finalized by the user and the visualization server 150 is ready to calculate the quote, the number of stitches is calculated. The number of stitches is directly proportional to the size of the logo and depends on the ratio of non-blank pixels to the imprint area. The visualization server 150 measures the number of pixels occupied by the artwork and calculates this area in square inches, then multiplies the area by the average number of stitches per square inch that is stored in the header of the product image file.

### (Logo area in square inches) x (Average number of stitches per square inch)

This calculation technique allows the user to rely on pricing before placing the order, rather than waiting for the embroider to apply the design and then determine the number of stitches used in making the final design. For example, if an imprint area is 200 pixels and it is 5 inches wide, and the logo is 100 pixels, then two and a half inches is going to be multiplied by the average number of stitches per square inch. The average number of stitches per square inch can be user-modified. The only change that needs to be made to the above calculation process is that instead of retrieving the average number of stitches from the header of the product image file, the value is sent to the visualization server 150 upon the user entering it at the Web browser. Based on the calculated or user-modified number of stitches per square inch and an embroidery price provided by various embroiders the fixed price quote may be calculated.

The user is then presented with the fixed price quote and a photo sample according to the information stored in the databases (i.e. product database, order database). The photo sample addresses the need for a pre-production proof feature that is well known in the industry. Instead of waiting for a manufacturer to complete a sample of a promotional product, the user can view the final product on the Web browser in the comfort of his/her own office.

In one embodiment of the present invention, the photo sample image may be generated to include filtering so that the composite image simulates the appearance of the logo applied to the product according to a selected manufacturing process or technology. In another embodiment of the present invention, the user may zoom in and out of the photo sample to view the image in greater detail. This feature is implemented using the techniques well known in the art.

In one embodiment of the present invention, the user may choose to send a finalized image for approval to a supervisor. Upon selection of this option, the visualization server 150 compiles an e-mail message and sends it to a specified e-mail address with an image of the final design, or, in the alternative, with the URL of the Web site where the final design image may be viewed.

Upon accepting the fixed price quote, operation 316 of Figure 3, the order details are written into the order database on the visualization server 150. The request for shipping and billing information is being displayed on the Web browser for the user to fill out. In the alternative, the customer shipping and billing information stored in the customer database may be displayed on the Web browser for validation. When shipping and billing information is validated or entered into the order database, the payment method is requested. Upon entering of the payment method at 320 and validation of it at 321, the transaction with the user is complete. At this point the order, shipping and billing information is formatted and sent to the supplier. In one embodiment of the present invention all the necessary information about the customer order is formatted into an email message form and sent to a supplier.

In the foregoing specification the present invention has been described with reference to specific exemplary embodiments thereof. It will, however, be evident that various modifications and changes may be made to the specific exemplary embodiments without departing from the scope of the invention as set forth in the appended claims. Accordingly, the specification and drawings are to be regarded in an illustrative rather than a restrictive sense.

Attached is an additional discussion and illustration which is part of the disclosure of this application.

Methods and apparatuses for online generation of a composite image in which first and second images are selected via a web interface presented on a browser. The second image is positioned relative to the first image via the web interface and relative positioning information is generated. The selected first and second images and the positioning information are communicated to a server via a network. A composite image of the first and second images is generated according to the positioning information and communicated from the server to the browser via the network. The composite image may be generated to further include: grid positioning; filtering; and, warping. Further, the composite image may be generated as a pre-production proof image that incorporates pre-determined product design parameters associated with at least one of the images. Further, a product manufacturing specification may be generated from user generated image data, where the user generated image data is associated with at least one database having pre-determined product specification parameters.

### 1.1 STATEMENTS

### 1.1.1Title: Composite Image Generation

A method and apparatus for generating a two-dimensional composite image which includes selecting a first image via a web interface presented on a browser, selecting a second image via the web interface presented on the browser, positioning the second image relative to the first image via the web interface to generate relative positioning information; communicating the selection of the first and second images, and the relative positioning information, to a server via a network; generating at the server a composite image of the first image and the second image, and, communicating the composite image from the server to the browser, via the network.

In one exemplary embodiment, the generation of the composite image may be used to enable visualization of online promotional products. For example, a user may select a first product image, for example, a polo shirt, via a web interface presented on a browser. The user may then select a second decoration image, for example, a logo graphic, via the web interface presented on the browser. The user may then position the decoration image relative to the product image via the web interface to generate relative positioning information. The selections of the product image and the decoration image, and the relative positioning information are communicated to a server via a network, such as the Internet. The server generates a composite image of the decoration on the product according to the positioning information and communicates the composite image from the server to the browser, via the Internet. In one embodiment, the composite image may be generated using Hypertext Markup Language (HTML) calls to the Application Program Interface (API).

### 1.1.2 Title: Composite Image Generation Including Grid Positioning

A method and apparatus for generating a composite image as described in 1.1.1 where positioning the second image relative to the first image further includes calibrated positioning. In one embodiment, the relative position of the second image to the first image is selected on a positioning grid, generating positioning information that includes the grid position. The grid position corresponds to a pre-defined imprint area on the first image and allows selective manipulation of the second image relative to first image. In one embodiment the positioning grid is a 5 X 5 grid. In one embodiment the positioning grid may be defined in an alpha channel of the first image.

For example, a selected decoration image may be positioned relative to a selected product image utilizing a 5 X 5 positioning grid. The positioning grid corresponds to a pre-defined imprint area on the product. The position of the decoration image relative to the product image is selected on the 5 X5 positioning grid generating positioning grid coordinates. The positioning grid coordinates are communicated to the server via the web browser with the selection of the first and second images.

### 1.1.3 Title: Composite Image Generation Including Filtering

A method and apparatus for generating a composite image as described in 1.1.1 further including filtering. In one embodiment, the composite image may include filtering to simulate the appearance of the second image as applied to the first image according to a selected manufacturing process. In one embodiment, the manufacturing process is a decorative technology process.

For example, a user may select that a decoration image, such as a logo, be applied to a product image, such as a polo shirt, by embroidery. Thus, the composite image generated at the server and communicated to the browser simulates the appearance of the logo embroidered on the polo shirt.

In one embodiment, the second image is filtered prior to generation of the composite image.

### 1.1.4 Title: Composite Image Generation Including Warping

A method and apparatus for generating a composite image as described in 1.1.1 further including warping. In one embodiment, the composite image may include warping to simulate the curvature of the second image as applied to the first image. In one embodiment, the warping simulates spherical curvature. In one embodiment, the warping simulates cylindrical curvature. In one embodiment, the warping is determined according to a warp ratio defined in an alpha channel of the first image.

For example, a user may select a decoration image, such as a logo, be applied around the middle of a product image, such as a mug. Thus, the composite image generated at the server and communicated to the browser would simulate the appearance of the logo cylindrically curving around the middle of the mug.

### 1.1.5 Title: Composite Image Generation Including Image Parsing

A method and apparatus for generating the composite image as described in 1.1.1 further including image parsing. In one embodiment, the server parses at least one data aspect of the selected second image and generates image parsing information associated with that aspect of the second image. The image parsing information is communicated together with the composite image from the server to the browser via the network. The image parsing information allows manipulation of that aspect of the second image via the web browser. In one embodiment, the image parsing information may be communicated in an alpha channel associated with the second image. In one embodiment, the image parsing information may include image density data associated with the second image. In one embodiment, the image parsing information may include color data associated with the second image.

### 1.1.6 Title: Composite Image Generation as a Pre-production Proof

A method and apparatus for generating the composite image as described in 1.1.1 further including first image design parameters so that the composite image generated is a pre-production proof image. In one embodiment, prior to generating the composite image, the server associates second image data related to the selected second image and first image data related to the selected first image with data in at least one database, where the database includes pre-determined first image design parameters. The server generates the composite image incorporating the pre-determined first image design parameters. In one embodiment, the first image design parameters may be pre-determined product design parameters.

For example, a decoration image, such as a large company logo may be selected for laser engraving on a selected product, such as a wooden golf tee. The server receives the information related to the selections and associates the selections with the product design parameters of the wooden golf tee. The composite image generated at the server and communicated to the browser will have the logo applied according to the limitations of the golf tee product design parameters. Thus, the composite image generated is a pre-production proof image of the customized product.

### Logo File Processing

### Overview

This module will prepare logo files for use by the system and will store the following files in the logo vault:
- Original art: File from customer. Can be in any of the following formats:
- Postscript vector art, which includes:
   - Adobe Illustrator
   - EPS
- Raster art in any of the following formats:
   - JPEG
   - TIFF
   - BMP
   - PNG
   - Others can be added as needed
- Thumbnail: JPEG to be used for selection of logo from logo vault
- Raster: Raster version of the logo in PNG format. Includes an alpha channel for compositing.

### Operation

When a logo is received from the customer, a raster image is first prepared for it. This will be a different process depending on whether the input file is a raster or a vector file.

If the input file is already in a raster format, then the raster will be read in and converted to PNG format. An attempt will be made to guess where the transparent areas of the logo are by looking at the color around the edges. For example, it may be assumed that anything that is that color is transparent. Later, some utility can be provided to the user for fine-tuning the transparent areas.

If the input file is vector art, then the Postscript to Raster Conversion module will be called to render the vector into a raster. The vector will be rendered twice, using two different background colors. The differences between the two renderings will be used to calculate the alpha channel for the raster.

Once the raster PNG is created, it will be scaled down and saved as a JPEG for use as a thumbnail when displaying the logo vault.

### Usage

This module will be called with command line arguments and can be part of a batch process. The calling method is as follows:
**ConvertLogo** *input_file* Where:
- *input_file*: Input logo file.
The output file names will be based on the input file. For example, if the input file is called logo.ai, then the following files will be output:
- logo_v.png: Raster representation of logo
- logo_v.jpg: Thumbnail image of logo

### Logo Raster Processing

### Overview

When raster files are received for logos, some amount of pre-processing is necessary before they can be used in the system. A utility may be used to attempt to guess where the transparent areas lie in the logo artwork. Some subsequent cleanup will probably be needed by Branders operators. The raster artwork may also be converted to vector by a Branders operator.

### Product Photo Conversion

### Overview

This module will prepare product photo files for use by the system and will store the following files in the Product Photo Vault:
- Product Image: PNG file containing high-resolution product image. The alpha channel identifies printable area.
- Thumbnail: JPEG file containing thumbnail size image

### Operation

All of the operations necessary for Product Photo Conversion may take place in Adobe Photoshop on Windows. A blank product photo will be received from the product manufacturer that is of sufficient resolution for high-resolution viewing in subsequent releases. We would recommend at least a 1.3Mega-pixel image. The product photo will show the entire printable area, and will also have a 10 inch ruler in one of the sides. The Branders operator will then perform the following steps:
1. Open the product photo in Photoshop.
2. Invoke the Resolution and Cropping Filter plug-in. This plug-in will provide a user interface for measuring the 10 inch ruler and for cropping the ruler out of the image. The cropped image will then be returned to Photoshop, with the resolution set such that pixel to inch conversions are accurate.
3. Define an alpha channel using the selection tools in Photoshop, paying attention to the display in the Info palette. If the Info palette is set up to display inches as the ruler units, then the operator can accurately place and size the printable area.
4. Invoke the Product Photo Export plug-in. This plug-in will provide a graphical user interface for specifying any cylindrical or spherical warping that is desired in the composite image during processing in the **Product and Logo Compositing Engine**. Any other tags desired for inclusion into the product photo vault can be entered at this time. These tags are TBD. The plug-in then generates the product PNG and thumbnail JPEG and saves them to the Product Photo Vault.

### Postscript to Raster Conversion

### Overview

This module will be used to convert Postscript vector art to raster images for use by the compositing engine. Postscript vector art is anything that can be rendered by a Postscript RIP, including EPSF and illustrator file formats. The output will probably be a PNG file.

### GhostScript may be used for the rasterization.

### Operation

The Postscript RIP will be called to produce a PNG file of the desired dimensions, using the specified background color. There will be a second rendering using a different background color to try to determine where the transparent areas of the drawing lie. This information will be used to generate the Alpha channel for the PNG file.

### Usage

This module will be called with command line arguments and can be part of a batch process. The calling method is as follows:
**PostscriptToPNG** *ps_file png_file -width=xxxx-height=xxxx -bgcolor=rr,gg,bb* Where:
- *ps_file*: Postscript file to be rasterized
- *png_file*: Name for output PNG file
- *-width=xxxx*: Width of output image in pixels
- *-height=xxxx*: Height of output image in lines
- *-bgcolor=rr,gg,bb*: Background color specified as RGB.

### Product and Logo Compositing Engine

### Overview

This module will handle the job of creating a composite of the users logo on the product shot. Controls will be provided for scaling and positioning of the logo within the printable area and adding text. The module will output a JPEG file that can be displayed in the user's browser.

### Operation

The product PNG and logo PNG files are extracted from the appropriate vaults. The logo is composited on to the product image utilizing the alpha channels in both images. Any specified text is then rendered using the Postscript to Raster Conversion module, to insure accurate font matching with the final artwork. The result of the compositing will be written to a JPEG file for display in the browser. The caller has control over the size and positioning of the logo and text within the printable area. If any logo or text data lies outside of the printable area, then the module can optionally scale down and start over. This will enable us to insure that information fits within non-rectangular printable areas.

*Cylindrical and spherical warping of the logo and text onto the product photo. The information to describe the type and size of warp may be stored in the product PNG.*

### Usage

This module will be called with command line arguments and can be part of a batch process. The calling method is as follows:
**Composite** *product_file logo_file output_file -width=xxxx [-height=xxxx] [-effect=???]*
*-logo_size=xx[,yy] -logo_pos=xx,yy -rescale_if_needed*
*-text1 = "text" -text1_size=xx -text1_pos=xx,yy*
*-text2= "text" -tw2_size=xx -text2_pos=xx,yy*
where
- *product_file*: File name for product PNG
- *logo_file*: File name for logo PNG
- *output_file*: File name for desired output JPEG
- *-width=xxxx*: Desired width of output JPEG in pixels
- *-height=xxxx*: Desired height of output JPEG in lines. If missing, then the height will be scaled to maintain aspect ratio.
- *-effect=???*: Desired imaging effect to be applied to logo and text when compositing. Possible values are *emboss* and *embroidery.*
- *-logo_size=xx*,*[yy]*: Desired size of logo. Expressed as percentage of printable area. If height is missing, height will be determined from the width.
- *-logo_pos=xx,yy*: Position of logo within printable area. Expressed as percentage of printable area. Xx can be one of the following TL, TC, TR, ML, MC, MR, BL, BC, BR to position it in one of the top, middle, bottom, left, center or right spots in the printable area.
- *-rescale_if_needed*: If any part of logo or text lies outside of printable area, rescale smaller until it fits.
- *-text1= "text"*: First text string to be displayed
- *-text1_size=xx*: Size of first text string. Expressed in points.
- *-textl_pos=xx,yy*: Position of first text string. Expressed as percentage of printable area. Text can also be positioned using the TL. TC... positioning described for *logo_pos.*
*Additional text fields can be added following the first one.*

### Final Artwork Creation Engine

### Overview

This module will create the final artwork which will be sent to the manufacturer. The original logo artwork will be combined with any text and scaling instructions into an Illustrator file.

### Operation

For the most part, this will be a canned Postscript file that will be output. Some variables are the sizing and positioning of the logo, whether the logo is an image or Postscript, and any text to be displayed. The different variables will be plugged in and a Postscript file will be output. This Postscript file will follow the conventions from the Illustrator 3.0 Draft Specification.

### Usage

**MakeFinalArt** *product_file logo_file output_file -width=xxxx [-height=xxxx]*
*[-effect=???] -logo_size=xx[,yy] -logo_pos=xx,yy-rescale_if_needed*
*-text1="text" -text1_size=xx -text1_pos=xx,yy*
*-text2= "text" -text2_size=xx -text2_pos=xx,yy*
where
- *output_file*: File name for output Postscript file. For example, an *ai* extension.
All other options same as **Product and Logo Compositing Engine.**

### Proofing Engine

### Overview

This module is intended to provide a final check of the artwork before shipping it to the manufacturer. The Postscript file produced by the Final Artwork Creation Engine will be run through the PostScript to Raster Conversion module to prepare a JPEG for display.

### Operation

Creates JPEG preview of desired size.

### Usage

**FinalProof** *ps_filejpeg_file -width=xxxx [-height=xxxx]*
where,
- *ps_file*: Postscript file to be proofed
- *jpeg_file*: File name for output JPEG
- *-width=xxxx*: Desired width of output JPEG in pixels
- *-height=xxxx*: Desired height of output JPEG in lines. If missing, will be calculated from width to maintain aspect ratio.

- Warping: Cylindrical and spherical warping of the logo and text on to the product photo for better visualization. For example, the Product Photo Export plug-in may allow control over the type and height of the warp. The Product and Logo Compositing Engine may perform the actual warping during compositing.
- Embroidery: This filter effect simulates the appearance of embroidery on the product photo. A simple implementation includes posterizing of the logo and text to the number of colors needed and then running everything through a texture filter that gives the appearance of embroidery.

### 1 The Visualization silo

The Visualization silo provides the branding value to a product. Through this silo, a user can upload logos for imprinting on a product, add text, modify the image colors, change imprinting methods and effects, and view the final output.

This document contains information related to the Visualization features.

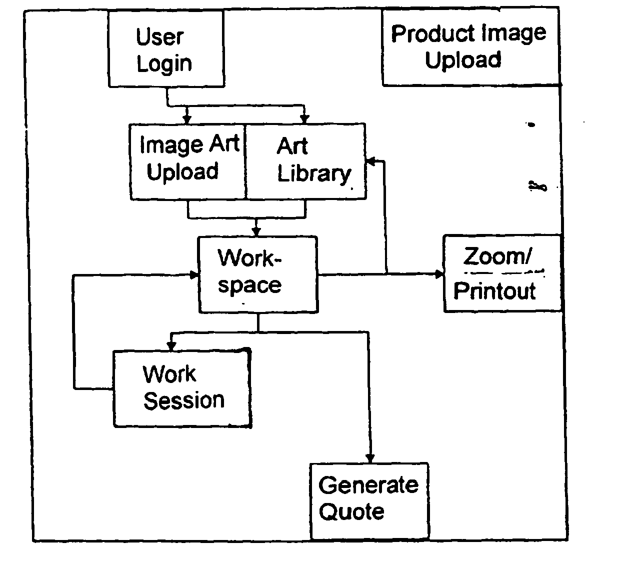

| Functional Component | Objective | User |
|---|---|---|
| Product Image Upload | • Upload the product images for the manipulation of Visualization Workspace and general catalog viewing. | Branders |
| | • Tie the product images to the supplier supplied color and trim color names. | |
| | • A product cannot go live until the images and information from this step are uploaded. | |
| User Login | • All users need to be logged in before using the Visualization application. | Customer |
| Art Library | • An archive where the user can upload and manage images to imprint on a product. | Customer |
| User Art Upload | (User Image Art Upload is a section of Art Library. It is highlighted in the diagram above because it can be accessed from the Introduction to Visualization and the Art Library sections.) | Customer |
| | • The process through which the user uploads their images and modifies them for use in Visualization. | |
| Visualization Workspace | • Provide the user with an interface to add and manipulate the imprint content on product: text, colors, image/logo, decoration method, etc. | Customer |
| | | |
| | • This section in the document also discusses the passing of the Visualization information to the Quote Generator. | |
| Work Sessions | • Provide the user the ability to save the Workspace. This saved workspace, called a work session, can be reapplied to other uploaded customer images. | Customer |
| | | |
| | • The work session will reside in the Project Folder, where it can easily be recalled. | |
| Clip Art (Exceeds/Future) | • Provide users the ability to choose Clip Art images to use in place of uploaded image. | Customer |
| Active X option (Exceeds/Future) | • Provide users the ability to use an Active X version of the Work Session, giving the user a better interface. | Customer |

### 1.1 Silo Functionality

### Product Image Upload

When a new product is introduced to Branders.com the images for the product images must be uploaded to the system and the filenames for the images needs to be associated to the product in the database. This is the primary purpose of the Image Upload component.

### 1.1.1 Process Flow

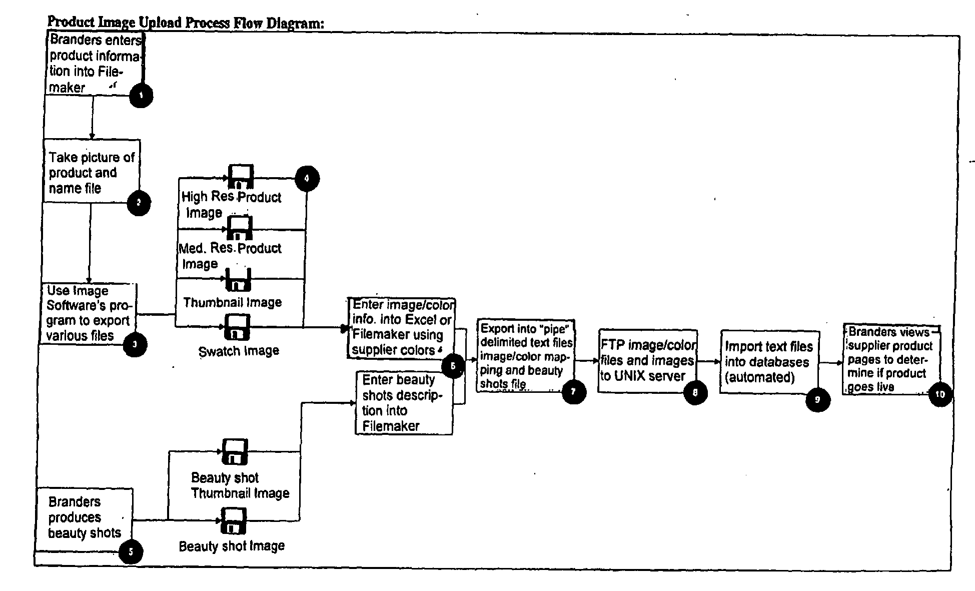

**Product Image Upload Process Flow: Details**

| # | Event | Processing Requirements | Comments/Issues |
|---|---|---|---|
| 1 | **Branders enters product Information into Filemaker:** This is primarily for Branders' personal tracking of incoming products, which products have be photographs. | | |
| 2. | **Take picture of product and name file:** Take picture of the product and generate digital image and name file. | **Image Naming Convention:** Naming Conference Call: 31 characters in name Name Components: Supplier name: (3 characters) Product SKU: (8 characters): mapped to vendor catalog number Supplier color name: (3 characters) View: front (fr), back (ba), bottom (bm), top (tp), rsleeve (rs), Isleeve (Is), beauty shot (bs), beauty thumbnail (bt) (2 characters) Imprint area: 01, 02, 03, 04, 05, (2 characters) Image variation: hr, Ir, sw, ln (2 characters) | |
| | | | |
| | | Suffix: 3-8-4-2-2-2-4 = 31 characters suppliername-productid-colorname-view-imprintarea-imagevariation.fileextension | |
| | | | |
| | | Rules: 1. all spaces are replaced by hyphen to separate fields of the name 2. all names should be lowercase, including suffix | |
| 3. | **Use program to export various files:** | Use program to export various files. The file names need to be created with the | |
| 4. 5. | Branders will use the image files created in step 2 to create various images for the visualization software. | • **High Res. Product Viz. Image** *(nee-450-red-fr-01-hr.png)* This is a high resolution PNG file of the product (1536 pixels across). The PNG file will contain the imprintable area in the form of an alpha channel. The PNG file will be used with the visualization too! when merged with the user uploaded image file to form the final image of the imprinted product. | |
| | | | |
| | **Branders takes beauty shots:** •A "Beauty shot" and "Beauty shot thumbnail" image is acquired from the Supplier. Both images are in ajpg format and will be used to display the product to the users in the catalog sections of the site. | • **Med. Res. Product Viz Image** *(nee-450-red-fr.01-mr.png)* This is a medium resolution PNG file identical to the high resolution image but used as a substitute if the final display image will not necessitate such high resolution (approx. 738 pixels across). The PNG file will contain the imprintable area in the form of an alpha channel. It will be used the same way as the high resolution image to produce the final image of the imprinted product. (If view is set to "beauty shot" then both High and Med. may be the same filename.) | |
| | | | |
| | | • **Thumbnall Product VIz. Image** *(nee-450-red-fr-01*-*th.png*) This image does not currently have a purpose. However, it may become valuable in the future (e.g. selecting different colors of the product in the visualization screen). This will be in a JPG format. | |
| | | | |
| | | • **Swatch VIz. Image** *(nee-450-red fr-01-sw.png)* The Swatch image with a PNG format will be used to carry the RGB value that best represents the base color of the item. The Swatch image will be used to render the artwork design area in the artboard program. | |
| | | | |
| | | (For all images taken the same naming convention as listed in step 2 is used.) | |
| | | | |
| | | **Beauty Shot Images:** The Beauty shot images are a different bread of images from the Viz. Images. Since the Viz. Images will be used in the visualization section, there will be images for all color/trim combinations of the product. The Product Beauty shot images are used in the product catalog section, making it only necessary to have a beauty shot for only one color combination of the product. These images are not passed through the Photoshop's export plug-in. | |
| | | | |
| | | • **Product Beauty Shot Image** *(nee-450-bs.jpg)* This image will be used in the product catalog detail pages before the user moves into visualization. (Note that there is only one Product Beauty Shot image per product) | |
| | | | |
| | | • **Product Beauty Shot Thumbnail Image** *(nee-450-bt.Jpg)* This image is used to present all the present all of the products to the user via the product categories. (Note that there is only one Product Beauty Shot Thumbnail Image per product.) | |
| 6. | Enter Info. Into Excel or Filemaker using suppliers colors: To match up the images produced in step 5 and the color names assigned by the Supplier when a product is created, the Branders needs to create a "image/supplier color matching" table. This table can be created using any software program Branders prefers, so long as the output matches that described in step 7. | The database/spreadsheet needs to contain the following fields entered accordingly (all lowercase): | |
| | | • Supplier Name (as it is listed in the Branders.com Oracle database) | |
| | | • Supplier SKU (as it is listed in the Branders.com Oracle database. This is the sku number for the product that can be found in the supplier catalog.) | |
| | | • color/trim (as it is entered by the Supplier. Spaces allowed) | |
| | | • view of the image (completely entered. E.g. front, back, right sleeve, left sleeve, etc.) - (the value for this field may be "front") | |
| | | • imprint area - The image area assigned for that set of images(the value for this field may be "1") | |
| | | • high res. image file name (using the file naming convention in specified in step #2) | |
| | | • medium res. Image file name (using the file naming convention in specified in step #2) • thumbnail image file name (using the file naming convention in specified in step #2) | |
| | | • swatch image file name (using the file naming convention in specified in step #2) | |
| | | • beauty shot file name (using the file naming convention for beauty shots in specified in step #2) | |
| | | • beauty shot thumbnail image | |
| | | beauty shot file name (using the file naming convention in specified in step #2) | |
| 7. | Export into comma delimited text file: The values from the Excel of Filemaker program need to be exported in a comma delimited format called the Product Image Mapping text file. | Create two files. One called the "Product Image and Color Mapping" file and the other called the "Beauty Shot Mapping" file. | Product image filenames are tied to the product records in the database via the image/color mapping file. |
| | | | |
| | | Product Image and Color Mapping file: The purpose of this file is to map the product images provided by Branders to the correct product color combination in the database. | |
| | | | |
| | | The contents of the file is comma delimited with carriage return breaks. A colon is used to separate the color from the trim. | The file names do not have "pipes" in the color trim field since the output file is pipe delimited. |
| | | An example is seen below: Supplier Namelsupplier skulcolor:trimlviewlimprint arealhigh-res image filenamelmedium-res image filenamelthumbnail image filenamelswatch image filename | |
| | | | |
| | | Example: Neelyl1502light green:whitelfrontl01Inec-1502-Igwh-ft-01-hr.pnglnee-1502-1gwh-fr-01-mr.pngInce-1302-Igwh-fr-01 -th.pngInce-1502-pngInce-fr-01 -sw.png Neely11502Right green:bluelfrontl01Inee-1502-lgbl-fr-01-hr.pngInee-1502-lgbl-fr-01-mr.pnglnee-1502-Igbl-fr-Ol-th.prtglnee-1502-lgbl-fr-01-sw.png | |
| | | | |
| | | The name of the file to export needs to follow this convention, to eliminate overwriting files when they are uploaded to the server. | |
| | | | |
| | | Product_image_map_(yyyy)(mm)(dd)(a = first upload of the day b = second upload of the day, etc.).txt Example: product_image_map_19991031a.txt | |
| | | | |
| | | **Beauty Shot Mapping:** The purpose of this file is to map the product beauty shots to the correct product in the database. | |
| | | | |
| | | The Beauty Shot Mapping file is named as follows: Produc_beauty_map_(yyyy)(mm)(dd)(a = first upload of the day b = second upload of the day, *etc.).txt* Example: product_beauty_map_19991031a.txt | |
| | | | |
| | | The naming convention for the beauty shot and beauty shot thumbnail filenames are: *Supplier-product sku-image type·jpg* *Such as: nee-450-bs.jpg and nee-450-bt.jpg* | |
| | | | |
| | | *An example of output text in the beauty shot mapping file is:* Neelyl1502lnee-450-bs.jpgl nee-450-bt.jpglThe Australian polo shirt | |
| | | | |
| 8. | FTP image/color mapping file and Images to UNIX server All of these image files listed in step 5 and the "product mages mapping!' file from step 6 are to be FTP'ed up to the UNIX server by Branders. The directory it should be stored in is /pub/uploads/product_image_mapping/ | This is a manna! process. | Image filenames are unique, so they can be uploaded as is. |
| | | | |
| | | | The text files should be FTP'ed with text selected. The images should be uploaded in binary mode. |
| 9. | **Import Image/Color Mapping File Into Database** At this point the "product images mapping file" is imported into the database. This will be handled by a cron job running every night That means the user will have all day to make a change to the file and overwrite the previous one if necessary. This is not a recommended practice, but may be very valuable if needed. | When the product_image_mapping cron job finds a new Product Image Mapping file in the appropriate directory, it processes the content. | |
| | | | |
| | | Step 1. Find the matching product and color to tie the image to. This is done by matching the supplier name, product sku, and color of the Product Image Mapping file to the supplier name, product sku, and color in the database. When the contents of the Product Image Mapping file is used to find the match in our database, the comparison code should compare to the items without case sensitivity. | |
| | | | |
| | | Step 2. Check to see if there are any images tied to this supplier, product, color. If so, delete the saved references to the old graphics. | |
| | | | |
| | | Step 3. Copy the new images to the appropriate directory. To scale the number of folders needed for saving the ongoing creation of images, an automatic scaling mechanism will be applied to the directories in /export/home/ branders_images/branders_images/product_visualization_images (Refer to the "Scaling Folders Method" described in the Order Management:Quote section of Workspace Process Flow: Details.) | |
| | | | |
| | | A sample folder name: /export/home/branders_images/product_visualization_images/00001 | |
| | | | |
| | | Step 4. Save the directory name and images into the database (image_url and image_id of table mvc_produc_images) | |
| | | | |
| | | Step 5. Email a feedback page back to the Brander's administrators with a report of the upload process. It will be formatted as follows: | |
| | | IMAGES UPLOADED SUCCESSFULLY: vantage-1502-lgwh-fr-01-hr.png vantage-1502-lgwh-fr-01-mr.png vantage-1502-lgwh-fr-01-th.png vantage-1502-lgwh-fr-01-sw.png | |
| | | | |
| | | IMAGES NOT UPLOADED SUCCESSFULLY: No match found for Vantage, 1502, Blue/white trim vantage-1502-blue-fr-01-hr.png vantage-1502-blue-fr-01-mr.png vantage-1502-blue-fr.01-th.png vantage-1502-blue-fr-01-sw.png | |
| | | | |
| | | The beauty shots will be stored in /export/home/InterShop/ishome/Data/Branders/ProductImages | |
| | | | |
| | | the same as the visualization images, the last part should reflect the type of shot, eg. "-thm" and "-bty" or something to that effect. Thus, the URL can be referenced in the mvc_products table, for example, as"ame-001 100-wht-fr-bla" and can append either "-thm.jpg" or''. bty.jpg" as required. This assumes that all images will be .jpg's. If there will be a mixture of .jpg and .gifs, then a field should be added to the mvc_products table to reflect the URL for each image. | |
| 10. | Branders views supplier product pages to determine if product goes live. | The mechanism through which Branders will be able to review the graphics for a product is through the Supplier Catalog administration screens. | |
| | | | |
| | The Branders administrators approve every product before it goes live through the product catalog section. | Refer to the Product Technical Requirements and review the manual flag setting for making the product live. | |

### Visualization Process Flow: Diagram

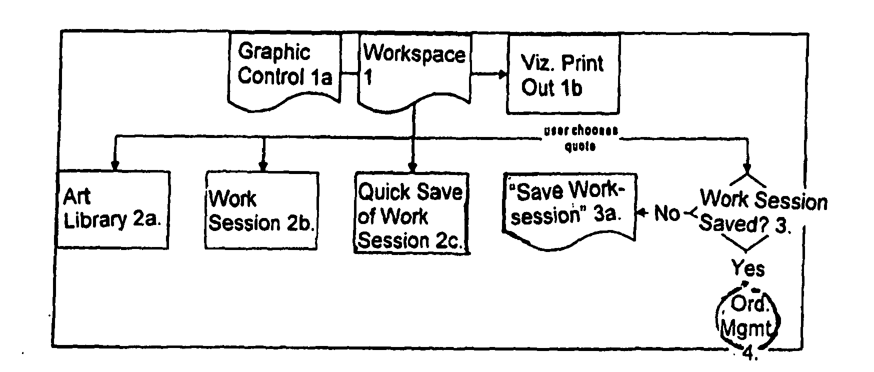

**Workspace Process Flow: Details**

| # | Event | Processing Requirements | Comments/Issues |
|---|---|---|---|
| 1 | Workspace page is presented to the user. | The Visualization Workspace is the central point through which the visualization work is performed by a user. | |
| | | | |
| | | This page presents the user with the look of the product imprinted with the image and settings the user enters. | |
| | | | |
| | | The settings are specified on this page, through the initial product selection, and the control page. When the settings are inputted, they are passed to the Composite program, which generates an outputted swatch and an imprint product image. The swatch and the imprint product images are used to rebuild Visualization Workspace page reflecting the users settings. | |
| | | | |
| | | Below are the various settings that are used to generate the Workspace page and where they come from: | |
| | | | |
| | | INPUT: | |
| | | • Product Catalog, HTML/Intershop Integration: Product_id | |
| | | • Visualization Workspace: Product Color and Trim (pull list from color_id of mvc_product_colors) | |
| | | • Visualization: Decoration Method (pull the list of decoration methods for the product_id from imprint_method_id of the mvc_product_imprint_methods table) To provide gold fill for embossing and debossing, the additional "embossing - gold fill" and "debossing - gold fill" are listed. | |
| | | • Graphic Control: Line 1 Text | |
| | | • Graphic Control: Line 1 Position | |
| | | • Graphic Control: Line 1 Color (pull list from mvc_rgb_colors) | |
| | | • Graphic Control: Line 1 Size (pull this list from mvc_visualization_font_sizes. This is a table of available font sizes) | |
| | | • Graphic Control: Line 1 Typeface (pull this list from mvc_vis_font_typefaces. This is a table of available typefaces) | |
| | | • Graphic Control: Line 2 Text | |
| | | • Graphic Control: Line 2 Position | |
| | | • Graphic Control: Line 2 Color (pull list from mvc_rgb_colors) | |
| | | • Graphic Control: Line 2 Size (pull this list from mvc_visualization_font_sizes. This is a table of available font sizes) | |
| | | • Graphic Control: Line 2 Typeface (pull this list from mvc_vis_font_typefaces. This is a table of available typefaces) | |
| | | • Image Upload: Image name | |
| | | • Graphic Control: Graphic Position | |
| | | • Graphic Control: Graphic Size | |
| | | • Graphic Control: Graphic Color (pull list from mvc_rgb_colors) | |
| | | For display purposes only, there is a switch to display the imprint area of the displayed imprinted product image. | |
| | | A product color drop list box will be used for the user to select the color of a product. The contents of "the product color drop down list box" is pulled from color_id field of the mvc_product_colors table where the supplier sku matches that selected from the user. The list of names is to be a direct list as it is presented from the table. | |
| | | If the product selected for the workspace does not allow 4 color process as indicated in the | |
| | | USER ACCESS Only logged in users can access the Visualization section including the workspace page. | |
| | | This page still needs to function if no user image is selected. This may be an intentional action by the user to just have text on the screen. | |
| | | The system will check the following: | |
| | | - If one of the settings is not set, prompt the user to go to the appropriate location and set it. | |
| 1a | Display Graphic Control | This is displayed whenever the Visualization Workspace page is displayed. If the Visualization Workspace page is closed, then the Graphic Control page is closed as well. | |
| | | | |
| | | A "Show Graphic and Text Control Window" button needs to reside on the page. This button will bring the control window to the front so it does not easily get lost behind the others. | |
| | | | |
| | | The Graphic Control page can not have close window option since the graphic control can not be called manually. | |
| | | | |
| | | The variables used in the Graphic Control page should be session based, allowing the ability to easily recall these values for the session if the user decides to save the work session after traveling through various locations (static web pages.) | |
| | | | |
| | | OPTIONS: There are two lines through which a user can enter text into Visualization. The options for both sets of text are identical. The options will be represented either as a single set of options and the user will have a toggle between which line of text the options will affect. Or, the options will be represented through two sets of input. | |
| | | • Line I Text: A standard text field. | |
| | | • Line 1 Position: A static 5X5 positioning rectangle, through which the user can click on the position. | |
| | | • Line 1 Color: A static list of colors the user can pick from: black, white, red, green, yellow, blue. Next to each color name is a small box representing the color. | |
| | | • Line 1 Size: The size is dynamically listed in a drop down list box. The sizes presented are dependant on the sizes we have populated in the server. It will be a standard set of sizes that will exist across all typefaces. | |
| | | • Line 1 Typeface: The typeface is dynamically listed in a drop down list box. The typefaces presented are dependant on those populated in the server. The every typeface used need to exist in all the sizes presented as an option in the Line Size option. | |
| | | • Graphic Position: A static 5X5 positioning rectangle, through which the user can click on the position. | |
| | | • Graphic Size: A static list of small, medium, and large. | |
| | | • Graphic Color: A static list of colors the user can pick from: "original colors" black**,** white, red, green, yellow, blue. Next to each color name is a small box representing the color. The original color are the original colors of the image. This is the default option. When a color other than "original colors" is selected, the non-transparent sections of the image are converted to that color. | |
| | | | |
| | | At the base of the Graphic control is are three buttons: | |
| | | • Visualize Now: Which executes the settings and refreshes the Visualization Workspace. | |
| | | • Clear Settings: Which clears all settings on the Graphic Control page. | |
| | | • Clear Graphic: Which removes the selected image art from the Visualization. | |
| | | | |
| | | Required fields are dependant on whether the Line 1 Text is populated, Line 2 Text is populated, or image art is selected for display. For each of these primary options, all of the respective sub-options are required to be selected. For instance, if an image art is not loaded then the graphic size, color, and position are not required. However, if Line 1 Text contains anything, then the Line 1 size, Line 1 Typeface, Line 1 Color, and Line 1 Position need to be set. | |
| 1b | Visualization Printout | The Visualization Printout page serves two purposes: 1) Provide a page the user can printout for review and their files. 2) Provide a zoom-in look of the imprinted product. | |
| | | | |
| | | The Visualization Page will provide a close-up view of the primary image. | |
| 2 | Save Work Session | From the Visualization Workspace, a user can choose "Save" which will pass the user to the Save Work Session page in the Project Folder. | |
| 3. | Quote: User Saved Work Session? | The user can choose "quote" from the Visualization Workspace. For a user to view a quote, he/she needs to have saved his/her works session. | |
| | | | |
| | | If the user has not saved the Work Session since their last changes the user is presented with a pop-up stating that they need to "save their work session" before continuing. (Step 3a). | |
| | | | |
| 3a. | Web page "Need to Save Work Session" | The user is presented with this screen if they have not saved their work session since their last changes. | |
| 4. | Order Management: Quote | When the user goes to the Quote page, a function of the Order Management silo, all of the visualization information needs to be made accessible. This is done by recording all the remaining visualization information need into the mvc_imprint_state table and recording the imprint_state_id into the session variable #imprint_state_id. | |
| | | | |
| | | The following information will be written to the mvc_imprint_state table: | |
| | | - work session id | |
| | | - imprinted image directory | |
| | | - imprinted product image | |
| | | - imprinted swatch image | |
| | | - imprinted product hi-res image | |
| | | | |
| | | This information will allow the Order Management developers to easily capture the imptint_status_id and access all of the Visualization information for that session. The imprint_status_id is keyed to the work_session_id of the mvc_work_session table which is keyed the mvc_image_archive table via the image_id. Through these keys and using the imprint_state_id order management will have complete access to all of the Visualization information. | |
| | | | |
| | | To save the imprinted images in a folder a "Scaling Folder" solution is used. | |
| | | Scaling Folders Method: The following solution will provide room for 400,000,000 files to be saved. 1. Before any images are saved, the system needs to identify what folder they should reside in. The system identifies the highest numbed folder in the directory /export/home/ branders_images/imprinted_images/ .The folders are named "#####" such as 000001. 2. The system looks into the largest named folder and determines if there are 20,000 or more images in it. If there are, then the system creates another folder using the highest numbered folder plus one. If the folder is not full, then this is the location to save the images. 3. The system saves the images into the folder. | |
| | | Once the images are saved in the folder, the path to the folder is saved in the mvc_imprint_state table as the imprinted_image_directory. | |
| | | | |

### Art Library Process Flow Diagram:

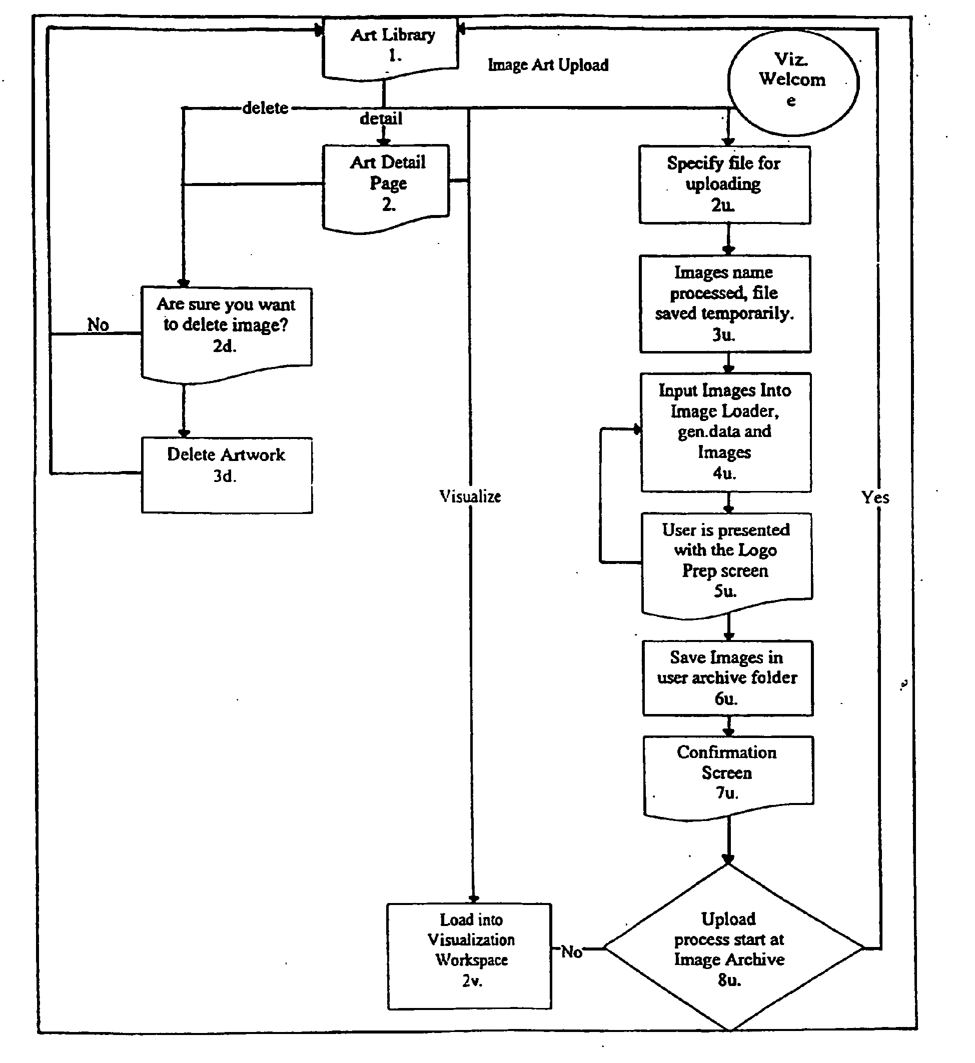

| **Art Library Process Flow: Details** | | | |
|---|---|---|---|
| # | Event | Processing Requirements | Comments/Issues |
| 1. | Art Library Page. | When a user clicks "Art Library" from the Workspace page, he or she is presented with this page. A vertically scrollable page displaying all of the saved graphics for that user_id. | |
| | | | |
| | | The graphics displayed are the thumbnail images of what the user uploaded. Thumbnail_image_art of mvc_image_archive | |
| | | | |
| | | Clicking on the image brings the user to the Art Detail page. | |
| 2. | Art Detail Page. | When a user clicks "See Details" underneath an image or the image on the Art Library page, they are brought to the Art Details page. This page presents the details of the image art for which they selected. | |
| | | | |
| | | The page presents the following information: | |
| | | | |
| | | • A picture of the image (For example, a pixel width of 350. This facilitates use of the image on this page as well as the image upload page for setting the alpha channels). For this image, use the medium resolution image found at medium_res_image_art of mvc_image_archive | |
| | | • The "title" of given to the image art when uploaded. Stored as image_art_title in mvc_image_archive | |
| | | • The "filename" of the image art. Stored as alpha_image_art in mvc_image_archive | |
| | | • The "file size" of the image art. This is read through the file system. | |
| | | • The "last updated date" of the image art. This is read form "last_updated" in mvc_image_archive | |
| | | • The notes for the image "image_notes" in mvc_image_archive | |
| | | • The panetone colors for the image "image_pantone_colors" in mvc_image_archive | |
| | | • The number of colors for the image "number_of_colors" in mvc_image_archive | |
| | | • 4 color processing allowed "four_color_process" in mvc_image_archive | |
| 2u. | User Specifies file to upload. | This step can be initiated from two locations: the Art Library page and the Introduction to Visualization page. | |
| | | The user will use the standard client side file selection feature of HTML 4.0. In the file selection window, the files that can be selected may be of these formats: *jpg, *.jpeg, *.eps, *.tif, *.tiff, *.bmp, *.png | |
| 3u. | Image name is processed and the image is saved temporarily. | The uploaded image is saved in /exprot/home/branders_images/user_images_temp/ The files in this directory will be automatically purged 24 hours after creation. | |
| | | | |
| | | For all uploaded images, the customer nr is appended on the front of the image name for tracking. Also an abbreviation for "original artwork" is inserted "orig". For Instance, the name "company_logo.tif" may be renamed: | |
| | | | |
| | | "1501-orig-company_logo.eps" (.(if or .bmp) | |
| | | All filename extensions will be renamed to a three letter standard. For instance, "jpeg" will be renamed to .jpg". | |
| | | | |
| | | Before an image is saved to the temporary directory, the system will check to see if a file will be overwritten when the customer nr is appended and the image is saved. The user should not be allowed to overwrite a file. If they need to, they will need to change the filename. | |
| 4u. | Input images into Image Loader, generate output data and images | Both EPS and bitmap images are loaded in the Logo Prep application generating a .png, .jpg thumbnail, and a .jpg medium res image of the uploaded image. The Logo Prep also generates a text file containing the # of colors found in the image. | |
| | | | |
| | | Through step #4 users can specify x,y coordinates indicating the addition or subtraction of alpha channels. This information is passed to the Logo Prep application with the png and jpg images to generate the output files. | |
| | | | |
| | | The output files should be named accordingly where 555555 represents the customer nr. "1501-alpha-company_logo.png" "1501-tn-company_logo.jpg" "1501-mr-company_logo.jpg" Save the images in /export/home/user_image_art_temp/ | |
| | | This process is ran before the user has the option to add or remove alpha channels (step 4) to ensure that if the user does not alter the alpha channels, at least the .png and jpg thumbnail is created and saved. | |
| | | | |
| | | The filenames, the # of colors, # of shades, 4 color process flag need to be recorded in a session variable for later usage. | |
| | | | |
| | | Since a user may cycle between steps 3 and 4 altering alpha channel settings, submit the png file as the original after the first time the image is processed through the logo prep. Otherwise, the alpha channel changes will be lost when the original art work file is resubmitted. | |
| 5u. | User is presented with logo prep screen. | Through this screen, the user will be able to add or remove alpha channels to the image. The medium resolution jpg file outputted from the Logo Prep (step 3) is used for the display and interface for altering the alpha channels. The jpg is presented as an image map on which the user can specify and addition or subtraction of alpha channels in specific areas. The user will be able to click on an area and toggle between making that area of the graphic as part of the alpha channel or not When the user clicks on an area he/she is passing the x and y coordinates to the server. This brings the user to step #3. | |
| | | | |
| | | The form is submitted through the show changes button below the image. When this screen is submitted, all values on the form need to be carried forward. | |
| | | | |
| | | The output from the LogoPrep application will include not only images but various information: the input file name and the number of colors detected. | |
| | | | |
| | | This screen should also state: | |
| | | •the number of colors detected in the image. The user will have the ability to change this by selecting another option in the drop down list box. | |
| | | •A check box indicating that whether the image will require 4 color processing for silk screening and sublimation imprinting. The formula is if the # of colors or shades is greater than or equal to 6. If so, this check box is toggled on. The user will have the ability to deselect this check box if desired. | |
| | | • The artwork title. The user will be warned to use only alphanumeric characters. | |
| | | • A field for entering pantone numbers (carriage return delimited) | |
| | | • File Notes field. | |
| 6u. | Save files to Image Archive | When the user is done assigning alpha channels he or she will want to save the image permanently. This is done through the "Verify Your Art Work Form" (See the Web Page Specifications Page). | |
| | | The mvc_image_archive is populated with the file information and save the images in the permanent location: "1501-orig-company_logo.eps" (.tif or .bmp) "1501-alpha-logo_test1 .png" "1501-tn-logo_est1.jpg" "1501-mr-logo_test1.jpg" | |
| | | | |
| | | Save the images to the appropriate directory. To scale the number of folders needed for saving the ongoing creation of images, an automatic scaling mechanism will be applied to the directories in /export/home/ branders_images/user_image_art/ (Refer to the "Scaling Folders Method" described in the Order Management:Quote section of Workspace Process Flow: Details.) | |
| | | A sample folder name: /export/home/ branders_images/user_image_art/0001 | |
| | | | |
| | | When the images are saved to the file system, the information needs to be saved in the database by creating an new record in the mvc_image_archive table. The "last_updated" field needs to be populated with the system date. | |
| | | • If the "image title" already exists, the user needs to be prompted that they will be overwriting another image. However, the user is provided means to continue if desired. In the warning, note to the user that this will alter the images on any saved work sessions that used that image. | |
| 7u. | Confirmation Screen | On the confirmation screen, indicate that the image (described by the title) was saved successfully in the selected project folder (the project folder name is specified). | |
| 8u. | Upload Process Start at Image Archive? | (Exceeds) To provide a smooth user experience, we want to pass the user to the most logical page after they have saved their image. | |
| | | • If the user entered the upload image process from one of the introduction screens, they should be passed to the Visualization Workspace after saving the image. This allows for the most common user who is uploading one image for a particular event and wants to immediately imprint the image after upload. | |
| | | • If the user entered the upload image process from the Image Archive then we should drop the user off at the same page they initialed the save process from. This will allows the user to easily upload many images. | |
| | | | |
| | | To accommodate this type of logic the source location of the page needs to be recorder in a session variable when the user chooses to upload a graphic. | |
| | | | |
| | | Until this component is built we will have the confirmation screen drop the user out to the Workspace by default. | |
| 2d. | Do you want to delete this image. | If the user selects delete from the Art Library page, they are presented with a delete confirmation page to make sure the button was not clicked accidentally. | |
| | | | |
| | | Provide a standard warning stating that the artwork should not be deleted if it is saved in a work session. The system displays all the saved work sessions for that user that contain that image. | |
| | | | |
| | | This page looks almost identical to the Artwork Detail page, but with a flashing question clarifying that the user wants to delete the Artwork. | |
| 3d. | Artwork Deleted | The artwork is permanently deleted. | |
| | | | |
| | | When the artwork is deleted, the corresponding record should be purged from the database and the artwork removed from the filesystem. This will allow the user to upload images and name a file with the same names as before. | |
| | | | |
| | | After the deletion, the user is returned to the Artwork Library page. | |
| 2v. | Visualization | If a user clicks on the Visualize button in the Art Library or the Artwork Detail, the selected artwork is loaded into workspace. | |
| | | | |
| | | If a user uploaded an image when coming into the Visualization silo, they are dropped into the workspace with the uploaded image loaded. | |

### Work Session Process Flow: Diagram

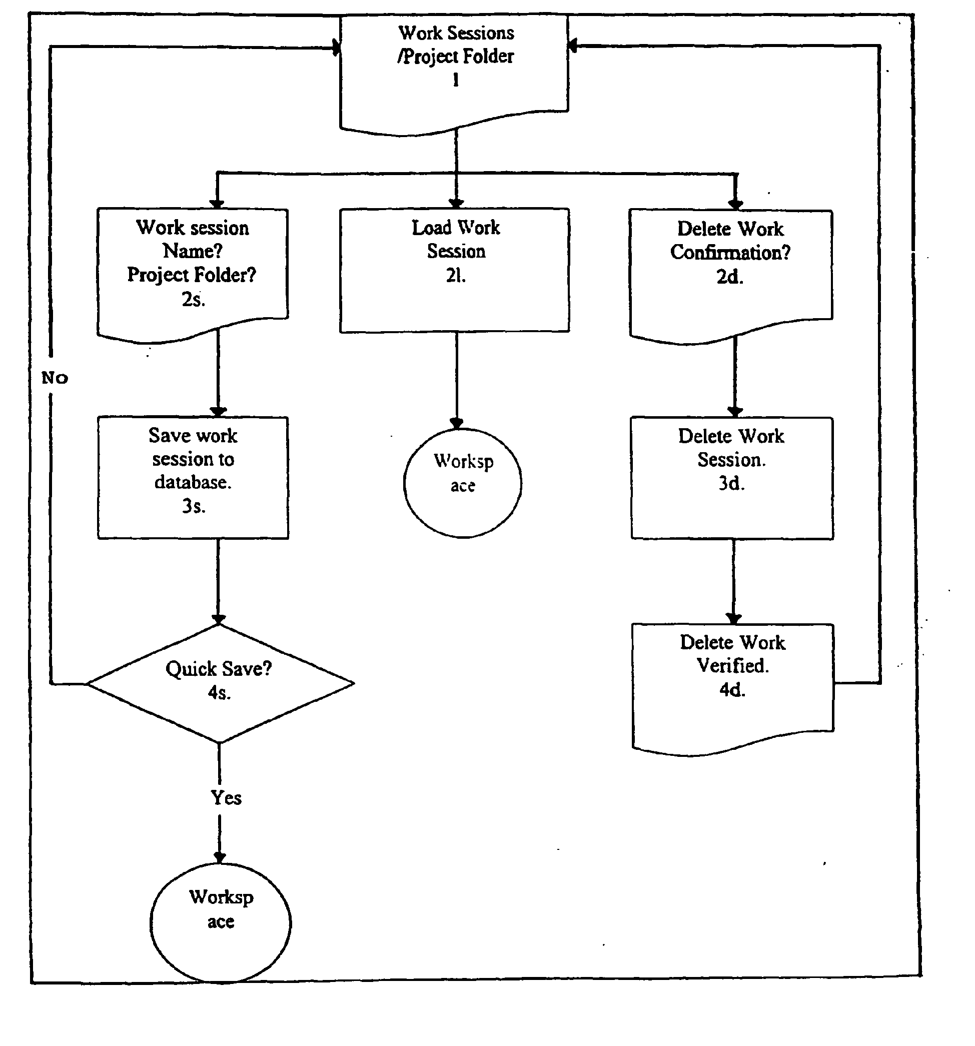

| **Work Session Process Flow: Details** | | | |
|---|---|---|---|
| # | Event | Processing Requirements | Comments/Issues |
| 1 | Work Session/Project Folder. | This the main page for any of the work session or project folder activities. | |
| | | | |
| | | On this page will be a drop down list box containing the project names. This is pulled from mvc_work_sessions where customemr is equal to the logged in customer number. Projects can not be created or deleted. Only the work sessions tied to them. | |
| | | | |
| | | Below the drop down list box, is a list of the work sessions saved to the selected project. When a new project is selected, the work sessions are listed without the form being resubmitted. | |
| | | The is a special project listed in the project folders list box called "All". This is the default. This, as indicated in its name, generates a listing of all work sessions for that user. | |
| | | | |
| | | Form this main page the user can select one work session from the list and choose either delete, or load. If the user chooses delete then the selected work session is to be deleted. If load is clicked then the user moves to the load page. | |
| | | | |
| | | A third type of option not dependant of choosing a work session is the save feature. If this is clicked the user goes to the save session page. | |
| | | | |
| | | The user can get to the Work Session/Project Folder main page from any page on the whole site. The implications of this is that someone may not have logged in. This means that this page needs to check if the user is logged in before displaying to the customer. If the user has not logged in the user needs to be sent to the login page of Acct Management. | |
| 2s. | Work Session Name? Project Folder? | If the user is going through the save process by clicking "quick save", the user is thrown to this page with all the settings already entered. | |
| | | | |
| | | If a user came to the Work Session/Project folder from a section other than Visualization, they may not have a product selected. This means that the user will not be able to save a work session. This check needs to be in place. | |
| 3s. | Save Work Session to db. | Save the work session to the database in mvc_work_session. | |
| 4s. | Quick Save? | If the user chose "quick save", then the user is returned to the workspace. Otherwise the user is returned to the Work Session/Project Folder page. | |
| 2l. | Load Work Session | The user can get to the Work Session/Project Folder main page from any page on the whole site. The implications of this is that someone may not have logged or selected a product. | |
| | | | |
| | | If the user has not selected a product yet because they got here via a different section than Visualization, this needs to be addressed when the user chooses load from the Load Work Sessions path. Since the project id is already recorded with the work session, it should be loaded with the work session. | |
| | | | |
| | | The system needs to check if the product (identified by the product_id form mvc_products) and image art are still active in the database and on the file system before it can be loaded. If not see the Exceptional Conditions in this document. | |
| 2d. | Delete Work Confirmation? | The user is prompted the make sure that they want to delete that work session. On the screen, we are going to display all attributes of that work session. | |
| 3d. | Deleted form the db. | The work session is deleted from the db. | |
| 4d. | Delete Work Verified. | The deletion is verified to the customer. Then the user is returned to the main Work Session/Project Folder page. | |

### 1.1.3 Reports

There are no reports for the Visualization silo.

### 1.1.4 Database Fields

Below is a list of fields that may be represented in each section described in this document. The fields listed below are not separated by table, that may be accommodated in the data model.

| Field | Description |
|---|---|
| Myc_image_archive | |
| Image_art_id | An id to uniquely identify the piece of artwork |
| User_id | The user the image belongs to. |
| Image_art_title | The title the user assigns to the image when it is saved. |
| Image_art_directory | The directory where the images are stored on the filesystem. |
| Original_image_art | The filename of the original image. |
| Alpha_image_art | The filename of the alpha image. |
| Thumbnail_image_art | The filename of the thumbnail. |
| Medium_res_image_art | The filename of the medium res image. |
| Number_of_colors | The number of colors identified in the image. Captured by the LogoBitmapPrep program. In version A4, the LogoBitmapPrep outputs this value as # of shades. |
| Four_color_process | A y/n field triggered off the number of colors. Currently the four color process is identified as necessary when a more than 6 colors it is automatically considered 4 color process. However, the user has the ability to override this during the image upload process. |
| Last_updated | The date and time the field was last updated. |
| Image_pantone_colors | The values for pantone colors. |
| Image_notes | The notes the user entered when uploading the graphics. |

| Myc_work_session | |
|---|---|
| Work_session_id | A unique id for the saved work session. |
| Product_id | The id of the product selected for the work session. This should be tied to product_id of mvc_products. |
| Image_art_id | The id of the user image used for the imprinting. This needs to be keyed to the image_id of mvc_image. Keyed to image_art_id of mvc_image_archive. |
| User_id | To tie the work session to user who saved it. F-keyed to the user id in Acct Management. |
| Work_session_title | The name the customer gives when saving the work session. |
| Prod_color_desc | The selected color/trim of the product. F-keyed to color_id of mvc_product_colors |
| Decoration_method | The decoration method used for imprinting. F-keyed to mvc_list_of_imprinted_methods |
| Image_position | The position of the image in relation to the 5 by 5 location table. |
| Selected_imprint_rgb_color | The selected rgb color for changing the imprinted image art. A null value indicates using the original colors of the artwork. This is f-keyed to mvc_rgb_color |
| Image_size | The size of the image. |
| Line_one_text | The text content of line one. |
| Line_one_position | The position of line one in relation to the 5 by 5 location table. |
| Line_one_color | The selected rgb color for the text. This is f-keyed to mvc_rgb_color |
| Line_one_size | The size of line one. Point size saved. This needs to be keyed to mvc_visualization_font_sizes. |
| Line_one_typeface | The font used for line one. Font name from system. |
| Line_two_text | The text content of line two. |
| Line_two_position | The position of line two in relation to the 5 by 5 location table. |
| Line_two_color | The selected rgb color for the text. This is f-keyed to mvc_rgb_color |
| Line_two_size | The size of line two. Point size saved. |
| Line_two_typeface | The font used for line two. Font name from system. |
| Project_folder | The name of the project the work session is assigned to. |
| Number_of_imprinted_colors | The number of colors after imprinting. This may differ from # of colors in the artwork because the user can add text. And, for every line of text they enter we add 1 color. Unless the colors of the text are the same. |
| | |

| Myc_imprint_state | |
|---|---|
| Imge_state_id | Unique identifier for the image_state. (This is pulled from the mvc_maximum_ids table. The developer needs to pull the selected id+1 where table_name is equal to mvc_imprint_state. After the number is gathered, the max number needs to be updated for that table.) |
| Work_session_id | The work_session_id saved before moving to quote. |
| Imprinted_image_directory The directory the imprinted images are stored in. | |
| Imprinted_product_image_fn | Filename for the medium resolution imprinted product image. |
| Imprinted_swatch_image_fn | Filename for the imprinted swatch image. |
| Imprinted_product_hr_image_fn | Filename for the high resolution imprinted product image also termed the final art. |

| Myc_rgb_colors | |
|---|---|
| Color_desc | The name of the color. This will be used to display to the customer. |
| RGB | The hexidecimal representation of RGB. |

| Myc_viz_typeface_sizes | |
|---|---|
| Typeface_size | The point sizes available for text imprinting on visualization. |

| Myc_viz_typefaces | |
|---|---|
| Typeface_name | |
| Typeface_unix_name | |

### 1.1.5 Features/Components

| | |
|---|---|
| 1. | Wrap-around image display for the Visualization Printout Page. |
| 2. | Additional Imprint areas per view. |
| | Visualization maywork with multiple imprint areas per view. |
| 3. | Additional Views per product. |
| | Visualization may handle multiple views of a single product. |
| 4. | Wrap-around Viewing |
| | When a user chooses save from the Visualization Workspace, specialized processes and pages may be made to make the option more user friendly than throwing the user to the Save Work Session page in the Project Folder. |
| | The Composite program has the ability to generate multiple images as needed to depict the wrapped views of an imprinting. For instance, if a user enters a long line of text that would wrap around a coffee mug. The Control program may generate two imprinted product images. The first image is may show a front view of the mug with the imprinting as it wraps out of view. The second image would show the back side of the mug with the remaining image. The visualization page may provide a user the ability to flip through these images through a two buttons interface at the base of the imprinted product image. |
| | It is important to note that the additional wrap-around images are just supplemental to the display on the Visualization Workspace. These additional wrap-around images and their information will not be processed or passed to any other page. |
| | The wrap around image processing will work as follows. If the Composite program returns more than one imprinted product images then the system will present the wrap-around buttons to the user. The initial image to be displayed is always the first of the primary image. The other images can be cycled through in a numerical order based on the numbering of the graphic filename. The images will be named as follows. |
| | Test.jpg Test-1.jpg Test-2.jpg Etc. |
| | To facilitate this programming the Composite program will provide the following output appended to end of its standard output: number of wrap-around images, and the image names. |
| 5. | **Last View Feature for Workspace:** |
| | |
| | When new settings are submitted for display on the Visualization Workspace the old session variables need to be copied over to a duplicate set of session level variable containers. This will allow the user the ability to choose last version and jump back to their last set of changes. |
| 6. | **Project Folder** |
| | |
| | A project folder where users can come to find all of the saved items related to a project. In a complete project folder development, users will be able to jump to the project folder from anywhere within a session. |
| 6. | **Project Folder's General Folder** |
| | |
| | The 1" and default project folder should be the "general" folder. (See the section on Project Folder). The "general" folder contains all of the images (and saved work sessions) that are not assigned to a particular project, allowing the user to see the images in the project folder area when a particular project has been selected. This also allows the user to view items not specific to a particular project |

### 2 Exceptional Events

| Event | Processing Requirements | Comments/Issues |
|---|---|---|
| A product or image art referenced in a save work session no longer exists or is flagged deleted. When Visualization Workspace is pulled up, the images will not be able to be displayed | • If the product no longer exists, the user should be informed that the saved work session refers to a product that no longer exists and the saved work session is deleted. | |
| | • If the saved image no longer exists, the user is informed and a standard image is used. The image should be piece of text stating that the image was deleted. | |
| If someone tries to delete an image that is reference in one of their saved work sessions. | • The user is prompted with a warning. They are allowed to proceed with the deletion. | |
| | • | |
| | | |

### 3 Regular Processing

| Event | Processing Requirements | Comments/Issues |
|---|---|---|
| Every night at 2:00 AM, product_image_mapping cron is executed. | It checks the contents of the directory /pub/uploads/product_image_mappi ng/ | |
| | | |
| | (See step 9 of Product Image Upload Process) | |
| Every night at 2:00 AM. Image_art_upload_cleanup cron is executed. | The cron removes uploaded user art work older than 24 hours old. | This cleans out all of the old temporary user images. |

### 4 Silo Dependencies

| Other Silo(s) | Description |
|---|---|
| Product | The pricing engine requires a calculating factor that occurs in the Viz process. The program estimates the number of stitches to be used for a customer's logo. A field called "number of stitches" or something like that may be used to calculate price. For example, this can be another attribute in mvc_saved_workspace. |
| Product | Visualization will be pulling the color and trim color from the product tables. |
| Supplier Communications | The images that are generated through the visualization process are reviewed via the administration pages in supplier communication. |
| Product | The uploaded product images are verified through the product administration pages, before an product goes live. |
| Order Management | Visualization will pass the unique id of the imprint state to order management and on to supplier communication. This id links to all of the visualization information used to generate the finalized imprinted image. The session variable #imprint_state_id will contain the unique id. |
| Product and HTML Integration | The product id which will be used to visualize will be passed to the Visualization engine through the product and HTML/Intershop Integration silos. This may be set as a session variable through which Visualization can pick up. |

### 5 Appendix A: Notes

- **Project:**: Branders Binaries

### Program Modules:

BrandersB1.tar.Z which contains:
- Composite: Visualization tool
- FinalArt: Final art output tool
- LogoBitmapPrep: Tool for preparing logos for use in the system
- LogoConverter: Tool called by LogoBitmapPrep.exe to convert EPS logos to bitmaps.

### Installation Notes:

1. Decompress BrandersA5.tar.Z anywhere.
2. Decompress gs5.50.tar.Z in any directory.
3. Set the GS_LIB environment variable. For example, if installed in /share/gstools/gs5.50: export GS_LIB=/share/gstools/gs5.50:/share/gstools/gs5.50/fonts

### 5.1 Features:

### Composite

- square inch calculation for area of imprint area covered by logo and text. This information is saved to the file specified in the -info option.
- special return code when a text area does not fit within the imprint area.
- -opaque option. This option forces some transparency into the logo and text for simulation of the embedment imprint method.
- embroider effect using texture.
- error handling and returns unique return codes for different error conditions.
- version to usage output. Printed when executing application with no command line arguments.

### 5.1.1.1.1.1 FinalArt

- error handling and returns unique return codes for different error conditions.
- version to usage output. Printed when executing application with no command line arguments.
-

### LogoBitmapPrep

- -swap option to allow for swapping the alpha channel state of the area under the cursor. -add and -sub are still available.
- error handling and returns unique return codes for different error conditions.
- version to usage output. Printed when executing application with no command line arguments.

### LogoConverter

- uses first path on GS_LIB environment variable to build path for Ghostscript application.
- error handling and returns unique return codes for different error conditions.
- version to usage output. Printed when executing application with no command line arguments.

### Composite

Composite product_file logo_file output_file
[-info=info_file
[-width=nnnnn]
[-effect=N|E|D]
[-embroidery]
[-engrave]
[-opaque]
[-color=r,g,b]
[-logo_pos=0-24]
[-logo_size=L|M|S]
[-logo_color=r,g,b]
[-text1=\" text\"
[-text1_pos=0-24]
[-text1_size=x, where x is points
[-text1_color=r,g,b]
[-text2=\"text\"
[-text2_pos=0-24]
[-text2_size=x, where x is points
[-text2_color=r,g,b]

- product_file: Product JPEG file. This may be one of the result files from the Photoshop plug-in. For best performance, this may be the one closest in size to the desired output size.
- logo_file: Logo PNG file. This may be from the **LogoBitmapPrep** program.
- output_file: Desired output file. This may be a JPEG file of the desired dimension specified by the - width option.
- -info: Desired information file. The argument to this option may be a file name. The output to this file maycontain the following information:
• Filename
• Square inches of logo and text area
• Dimensions of imprint area
• Percentage of imprint area covered by logo and text
- -width: Desired size for the output JPEG. This will be the longest dimension. The aspect ratio of the product JPEG file will be maintained.
- -effect: Desired imprinting effect. The argument may be one of the following:
N Normal mode. No special effect is applied.
E Emboss. The logo and text will be applied with a raised effect.
D Deboss. The logo and text will be applied with a sunken effect.
- -embroidery: The embroidery texture may be applied to the logo and text.
- -engrave: All color information is discarded from the logo and text and the resultant edges are used to apply an etched effect to the product image. Use in conjunction with the emboss and deboss effects for a raised or sunken etch.
- -opaque: Applies some transparency to the logo and text so that part of the product image is visible through them.
- -color: Argument is RGB value to render logo and text in. The logo and text will be converted to that single color. This overrides any other color specifications. RGB is specified as three comma separated decimal numbers from 0 to 255.
- -logo_pos: Logo position using 5×3 grid.
- -logo_size: Logo size specified as large(L), medium(M) or small(S).
- -logo_color: Argument is RGB value to render logo in. The logo will be converted to that single color.
- - text1: Argument is text string to display for first text field. Enclose in quotes.
- - text1_pos: Position of first text field. Specified as position in 5x5 grid.
- -text1_size: Size of first text field. Specified in points.
- -text1_color: Argument is ROB value to render first text field in.
- -text2: Argument is text string to display for second text field. Enclose in quotes.
- -text2_pos: Position of second text field. Specified as position in 5x5 grid.
- -text2_size: Size of second text field. Specified in points.
- -text2_color: Argument is RGB value to render second text field in.

The following return codes may be returned:
0= successful
>0 = successful, but text field identified by return code overflowed
-1 = usage error
-2 = unable to access input file(s)
-3= unable to write output file
-4 = unable to access X display
-5 = unable to create font for rendering
-6 = unable to create pixmap for rendering
-7 = unable to get render Ximage

The following table provides the effects which may be used to simulate a variety of imprint methods.
- Debossing: -effect=D
- Die-casting: -effect=E-engrave
- Die-striking: -effect=D -engrave
- Embedment: -effect=N -opaque
- Embossing: -effect=E
- Embroidery: -effect=E -embroidery
- Engraving: -effect=D -engrave
- Etched: -effect=D -engrave
- Hot stamp foil: -effect=D -color=204,127,50
- Branding: -effect=D -color=0,0,0
- Laser engraving: -effect=D -color=?,?,? (exposed color in product)
- Offset printing: -effect=N
- Pad printing: -effect=N
- Screen printing: -effect=N
- Sublimation: -effect=N

### FinalArt

FinalArt product_file logo_file output_file
[-info=info_file
[-width=nnnnn]
[-effect=N|E|D]
[-embroidery]
[-engrave]
[-opaque]
[-color=r,g,b]
[-logo_pos=0-24]
[-logo_size=L|M|S]
[-logo_color=r,g,b]
[-text1=\"text\"
[-text1_pos=0-24]
[-text1_size=x, where x is points
[-text1_color=r,g,b]
[-text2=\"text\"
[-text2_pos=0-24]
[-text2_size=x, where x is points
[-text2_color=r,g,b]

- product_file: Product JPEG file. This should be one of the result files from the Photoshop plug-in.
- logo_file: Logo file. This should be the user's original logo file, whether EPS or any other format.
- output_file: Desired output file. This will be an EPS file which contains the logo and text in the desired positions.
- -width: Ignored
- -effect: Ignored
- -embroidery: Ignored
- -engrave: Ignored
- -opaque: Ignored
- -color: Ignored
- -logo_pos: Logo position using 5x5 grid.
- -logo_size: Logo size specified as large(L), medium(M) or small(S).
- -logo_color: Ignored
- -text1: Argument is text string to display for first text field. Enclose in quotes.
- -text1_pos: Position of first text field. Specified as position in 5×5 grid.
- -text1_size: Size of first text field. Specified in points.
- -text1_color: Argument is RGB value to render first text field in.
- -text2: Argument is text string to display for second text field. Enclose in quotes.
- -text2_pos: Position of second text field. Specified as position in 5×5 grid.
- -text2_size: Size of second text field. Specified in points.
- -text2_color: Argument is RGB value to render second text field in.

The following return codes may be returned:
0 = successful
>0 = successful, but text field identified by return code overflowed
-1 = usage error
-2 = unable to access input file(s)
-3 = unable to write output file

### LogoBitmapPrep

LogoBitmapPrep in_logo_file -logo=out_logo_file
[-out=output_preview_file]
[-init]
[-add=x,y]
[-sub=x,y]
[-swap=x,y]
[-maxDim=n]

- in_logo_file: Input logo file. If -init is specified, this should be the user's original artwork file. Any other calls should use resultant output PNG file from previous call.
- -logo: Argument is file name for output PNG file. This file will be used in subsequent calls to LogoBitmapPrep and also in calls to Composite.
- -out: Argument is file name for preview JPEG file. Preview image has a pattern displayed in areas that are not exposed by the alpha channel for the logo.
- -maxDim: Desired output dimension for output preview file.
- -init: Use to prepare user's initial artwork for subsequent use in the system. If this artwork is a Postscript file, then LogoConverter will be used to rasterize.
- -add: Adds the area underneath the x,y position to the alpha channel for the logo. The x,y coordinates should be relative to the dimension specified in -maxDim.
- -sub: Subtracts the area underneath the x,y position from the alpha channel for the logo.
- -swap: Changes the alpha channel state of the area underneath the x,y position. If it was part of the alpha channel it will be subtracted. If not part of the alpha channel, it will be added.
- color_info_file: Contains color information about the logo. This file name is automatically generated from the output logo rile name, and will replace the -hr.png with -ci.txt. The following information is output to the file:
• Number of colors. This is the number of distinct colors encountered in the image. Single color gradients will return multiple colors.
• Number of shades. Estimate for number of shades of color encountered in the image. Fewer colors will be returned for a gradient. This number will always be less than the number of colors.

The following return codes may be returned:
0 = successful
>0 = successful, but text field identified by return code overflowed
-1= usage error
-2 = unable to access input file(s)
-3 = unable to create temporary files for GhostScript (from LogoConverter)
-4 = unable to fork new process for GhostScript (from LogoConverter)
-5 = GhostScript created an invalid PNG file (from LogoConverter)\n");
-6 = unable to write output file(s) (from LogoConverter)
-7 = unable to exec GhostScript (from LogoConverter)
-8 = unable to exec LogoConverter for Postscript conversion
-9 = unable to process result file from Postscript conversion
-10 = unable to process result file from Postscript conversion
< -32 = Ghostscript return code - 32 (from LogoConverter)
Notes:
1. The number of colors may be used for determining pricing information. This will give the proper value for the Inktomi logo.
2. The -init call with an EPS logo will return accurate color information. After that, the logo is anti-aliased when written to the PNG. This anti-aliasing affects the accuracy of the color counting.

### LogoConverter

LogoConverter ps_logo_file png_output_file jpg_thumb_file color_text_file
- ps_logo_file: Input logo file. This should be a valid EPS file.
- png_output_file: Output PNG file. An alpha channel will be created automatically.
- jpg_thumb_file: JPEG to use for thumbnail display of logo.
- color_text_file: Color information file.

The GS_LIB environment variable may be used to create the path to the Ghostscript executable.

The following return codes may be returned:
0 = successful
>0 = successful, but text field identified by return code overflowed
-1 = usage error
-2 = unable to access input file(s)
-3 = unable to create temporary files for GhostScript
-4 = unable to fork new process for GhostScript
-5 = GhostScript created an invalid PNG file
-6 = unable to write output file(s)
-7 = unable to exec GhostScript
< -32 = Ghostscript return code - 32

### 2.1 STATEMENTS

### 2.1.1Title: Product Manufacturing Specification Generation

A method and apparatus for generating a product manufacturing specification from user generated image data. In one embodiment, user generated image data is received at a server. The user generated image data is associated with data in at least one database, the at least one database having pre-determined product specification parameters. A product manufacturing specification is generated at the server.

In one embodiment, the first image and second image selected and positioned via a web browser according to any of 1.1.1 through 1.1.10 are associated with data in at least one database having pre-determined product specification parameters, and a product manufacturing specification is generated at the server. The product manufacturing specification may further be communicated from the server to a supplier. In one embodiment, the product manufacturing specification is automatically communicated as an email to a supplier. In one embodiment, the product manufacturing specification includes the URL of a web site where the composite image may be viewed and/or downloaded. In one embodiment, the product manufacturing specification may be associated with other databases which may include, for example, information relating to customer or shipping addresses and order date information.

For example, a design image and product image may be selected and positioned in accordance with any of 1.1.1 through 1.1.10. The information associated with the generation of the final, approved product may be used to generate a product manufacturing specification, which is automatically emailed to the supplier for production. To access the composite image of the customized product, the supplier accesses the URL of the web site listed on the product manufacturing specification.

## Claims

1. A method for generating a composite image including:
presenting a first image via a Web interface presented on a browser (105), the first image being generated from a product image file further including a warp ratio, the warp ratio referring to product image topography;
presenting a second image via a Web interface presented on the browser (105); communicating a selection of the first image and the second image to a server (120) via a network (110);
automatically generating a composite image of the first image and the second image at the server (120), the automatic generation of the composite image including placing the second image onto the first image according to the warp ratio; and
communicating the composite image from the server (120) to the browser (105) via the network (110).

2. The method of claim 1 wherein the first image is a product image.

3. The method of claim 1 or 2 wherein the second image is a decorative image including any one of a group of images including a logo image and a text image.

4. The method of one of the preceding claims wherein the composite image includes the second image placed in a default position on the first image.

5. The method of one of the preceding claims further including:
positioning the second image relative to the first image via a Web interface presented on the browser to generate relative positioning information;
communicating the relative positioning information to the server (120) via the network (110); and
automatically generating the composite image of the first image and the second image at the server (120) according to the relative positioning information.

6. The method of claim 5 wherein the positioning of the second image relative to the first image further includes selecting a location on a positioning grid via a Web interface presented on the browser (105) the selection generating the relative positioning information.

7. The method of one of the preceding claims wherein the composite image further includes filtering to simulate an appearance of the second image as applied to the first image according to a manufacturing process associated with a filter selection.

8. The method of one of the preceding claims further including:
selecting a filter via a Web interface presented on the browser (105), the selection of the filter generating a filtering information;
communicating the filtering information to the server (120) via the network (110); automatically generating the composite image at the server (120) according to the filtering information to simulate an appearance of the second image as applied to the first image according to a manufacturing process associated with the filter.

9. The method of claim 8 wherein the filter selection is embroidery.

10. The method of claim 9 further including automatically calculating a number of stitches.

11. The method of claim 8 wherein the filter selection is silk-screening.

12. The method of one of the preceding claims wherein the composite image further includes warping to simulate curvature of the second image as applied to the first image.

13. The method of claim 12 wherein the warping is determined according to a warp ratio.

14. The method of claim 12 or 13 wherein the warping simulates spherical curvature of the second image as applied to the first image.

15. The method of claim 12 or 13 wherein the warping simulates cylindrical curvature of the second image as applied to the first image.

16. The method of one of the preceding claims wherein the composite image is associated with information in a database, the associated information in the database being communicated together with the composite image from the server (120) to the browser (105) via the network (110), as a photo sample.

17. The method of claim 16 wherein the photo sample is sent via network (110) to a specified e-mail address.

18. The method of claim 16 wherein a URL containing the photo sample is sent via network (110) to a specified e-mail address.

19. The method of one of claims 16-18 wherein a user zooms in to the photo sample.

20. The method of one of claims 16-18 wherein a user zooms out of the photo sample.

21. The method of one of the preceding claims including a network-based method for generating a composite image, wherein automatically generating a composite image of the first image and the second image at the server (120) includes receiving the first image and the second image at the server (120) from the browser (105) responsive to a user selection of the first image and the second image.

22. The method of claim 21 including receiving a relative positioning information from the browser (105) via the network (110) and automatically generating the composite image of the first image and the second image at the server (120) according to the relative positioning information.

23. The method of one of claims 21 and 22 including receiving a filtering information from a client via the network (110) and automatically generating the composite image at the server (120) according to the filtering information to simulate an appearance of the second image as applied to the first image according to a manufacturing process associated with a filter selection.

24. The method of one of claims 1-20 including a network-based method for generating a composite image, wherein:
presenting a first image via a Web interface presented on a browser (105) includes presenting a first image for user selection;
presenting a second image via a Web interface presented on the browser (105) includes uploading a second image from a customer database; and wherein
communicating the composite image from the server (120) to the browser (105) via the network (110) includes receiving a composite image of the first image and the second image from the server (120) at the browser (105) via the displaying the composite image via a second Web interface presented on the browser (105).

25. The method of one of claims 1-20, including a network-based method for generating a composite image, wherein:
presenting a first image via a Web interface presented on a browser (105) includes presenting a first image for user selection;
presenting a second image via a Web interface presented on the browser (105) includes presenting a second image for user selection via a second Web interface presented on the browser (105), and wherein
communicating the composite image from the server (120) to the browser (105) via the network 110 includes receiving a composite image of the first image and the second image from the server (120) at the browser (105) via the network (110); and displaying the composite image via a third Web interface presented on the browser (105).

26. An apparatus for generating a composite image including:
means for presenting a first image via a Web interface presented on a browser (105), the first image being generated from a product image file further including a warp ratio, the warp ratio referring to product image topography;
means for presenting a second image via a Web interface presented on the browser (105); means for communicating a selection of the first image and the second image to a server (120) via a network (110);
means for automatically generating a composite image of the first image and the second image at the server (120), the automatic generation of the composite image including placing the second image onto the first image according to the warp ratio; and
means for communicating the composite image from the server (120) to the browser (105) via the network (110).

27. The apparatus of claim 26 wherein the first image is a product image.

28. The apparatus of claim 26 or 27 wherein the second image is a decorative image including anyone of a group of images including a logo image and a text image.

29. The apparatus of one of claims 26-28 wherein the means for automatically generating a composite image are further configured to generate the composite image according to a filtering information to simulate an appearance of the second image as applied to the first image according to a manufacturing process associated with the filtering information.

30. The apparatus of one of claims 26-29 wherein the means for automatically generating a composite image are further configured to generate the composite image according to the warping information to simulate curvature of the second image as applied to the first image.

31. The apparatus of one of claims 26-30 wherein the means for automatically generating a composite image are further configured to generate a photo sample.

32. The apparatus of claim 31 wherein the means for automatically generating a composite image are further configured to transmit the photo sample via the network (110) to a specified e-mail address.

33. The apparatus of one of claims 26-28 for generating a composite image including:
a first image database, the first image database to store at least one first image file;
a second image database, said second image database to store at least one second image file;
a server (120) to receive a user selection of the first image file and the second image file and to generate a composite image of a first image and a second image wherein the second image is positioned relative to the first image.

34. The apparatus of claims 33 wherein the server (120) is further configured to generate the composite image according to a filtering information to simulate an appearance of the second image as applied to the first image according to a manufacturing process associated with the filtering information.

35. The apparatus of claims 33 or 34 wherein the server (120) is further configured to generate the composite image according to the warping information to simulate curvature of the second image as applied to the first image.

36. The apparatus of one of claims 33-35 wherein the server (120) is further configured to generate a photo sample.

37. The apparatus of claim 36 wherein the server (120) is further configured to transmit the photo sample via the network (110) to a specified e-mail address.

38. The method of one of claims 1-20 further including:
automatically calculating an embroidery price of the composite image, the embroidery price comprising an estimated price for the application of a design represented by the second image to a product represented by the first image; and
communicating the composite image along with the calculated embroidery price from the server (120) to the browser (105) via the network (110).

39. The method of claim 38 wherein the automatically calculating the embroidery price includes calculating the second image area.

40. The method of claim 39 wherein the automatically calculating the embroidery price of the composite image further includes multiplying the second image area by an average number of stitches in a predefined area.

41. The method of claim 40 wherein the average number of stitches in the predefined area is stored in a product image file.

42. The method of claim 40 wherein the average number of stitches in the predefined area is modifiable by a user.

43. The method of claim 39 wherein the automatically calculating of the embroidery price of the composite image further includes utilizing an embroidery price of a number of stitches in a predefined area.

44. The method of claim 1, wherein the warp ratio provides a cylindrical warping.

45. The method of claim 1, wherein the warp ratio provides a spherical warping.

46. The method of claim 1, wherein the warp ratio is further defined to address an undulating product image topography.

47. The method of claim 1, wherein the warp ratio is further defined to address a cubist product image topography.

48. The method of claim 1, wherein the warp ratio is automatically calculated based on the diameter of a product.

## Patentansprüche

1. Verfahren zum Erzeugen eines zusammengesetzten Bildes, mit folgenden Verfahrensschritten:
Darstellen eines ersten Bildes über eine Web-Schnittstelle, die auf einem Browser (105) dargestellt wird, wobei das erste Bild aus einer Produktbilddatei erzeugt wird, die ferner ein Wölbungsverhältnis umfaßt, wobei das Wölbungsverhältnis sich auf Produktbildtopographie bezieht;
Darstellen eines zweiten Bildes über eine Web-Schnittstelle, die auf dem Browser (105) dargestellt wird;
Übertragen einer Auswahl des ersten Bildes und des zweiten Bildes zu einem Server (120) über ein Netzwerk (110);
Automatisches Erzeugen eines zusammengesetzten Bildes aus dem ersten Bild und dem zweiten Bild auf dem Server (120), wobei das automatische Erzeugen des zusammengesetzten Bildes das Plazieren des zweiten Bildes auf dem ersten Bild abhängig von dem Wölbungsverhältnis umfaßt; und
Übertragen des zusammengesetzten Bildes von dem Server (120) zu dem Browser (105) über das Netzwerk (110).

2. Verfahren nach Anspruch 1, wobei das erste Bild ein Produktbild ist.

3. Verfahren nach Anspruch 1 oder 2, wobei das zweite Bild ein dekoratives Bild aus einer Gruppe von Bildern ist, welche ein Logo-Bild und ein Text-Bild umfassen.

4. Verfahren nach einem der vorangehenden Ansprüche, wobei das zusammengesetzte Bild das zweite Bild umfaßt, das in einer Default-Position auf das erste Bild aufgesetzt ist.

5. Verfahren nach einem der vorangehenden Ansprüche, mit den weiteren Schritten:
Positionieren des zweiten Bildes relativ zu dem ersten Bild über eine Web-Schnittstelle, die auf dem Browser dargestellt wird, um Relativpositions-Information zu erzeugen;
Übertragen der Relativpositions-Information zu dem Server (120) über das Netzwerk (110); und
automatisches Erzeugen des zusammengesetzten Bildes aus dem ersten Bild und dem zweiten Bild auf dem Server (120) gemäß der Relativpositions-Information.

6. Verfahren nach Anspruch 5, wobei das Positionieren des zweiten Bildes relativ zu dem ersten Bild ferner das Auswählen einer Position auf einem Positioniergitter über eine Web-Schnittstelle, die auf dem Browser (105) dargestellt wird, umfaßt, wobei die Auswahl die Relativpositions-Information erzeugt.

7. Verfahren nach einem der vorangehenden Ansprüche, wobei das zusammengesetzte Bild ferner eine Filterung umfaßt, um ein Erscheinungsbild des zweiten Bildes zu simulieren, so wie es gemäß einem Herstellungsprozeß, der einer Filterauswahl zugeordnet ist, auf das erste Bild gebracht wird.

8. Verfahren nach einem der vorangehenden Ansprüche, mit den weiteren Schritten:
Auswählen eines Filters über eine Web-Schnittstelle, die auf dem Browser (105) dargestellt wird, wobei die Auswahl des Filters Filterinformation erzeugt;
Übertragen der Filterinformation zu dem Server (120) über das Netzwerk (110); automatisches Erzeugen des zusammengesetzten Bildes auf dem Server (120) gemäß der Filterinformation, um ein Erscheinungsbild des zweiten Bildes zu simulieren, so wie es gemäß einem Herstellungsprozeß, der dem Filter zugeordnet ist, auf das erste Bild aufgebracht wird.

9. Verfahren nach Anspruch 8, wobei die Filterauswahl eine Stickerei ist.

10. Verfahren nach Anspruch 9, bei dem ferner eine Anzahl von Stichen automatisch berechnet wird.

11. Verfahren nach Anspruch 8, wobei die Filterauswahl ein Siebdruck ist.

12. Verfahren nach einem der vorangehenden Ansprüche, wobei das zusammengesetzte Bild ferner eine Wölbung umfaßt, um eine Krümmung des zweiten Bildes, so wie es auf das erste Bild aufgebracht wird, zu simulieren.

13. Verfahren nach Anspruch 12, wobei die Krümmung gemäß einem Wölbungsverhältnis ermittelt wird.

14. Verfahren nach Anspruch 12 oder 13, wobei die Wölbung eine Kugelkrümmung des zweiten Bildes, so wie es auf das erste Bild aufgebracht wird, simuliert.

15. Verfahren nach Anspruch 12 oder 13, wobei die Wölbung eine Zylinderkrümmung des zweiten Bildes, so wie es auf das erste Bild aufgebracht wird, simuliert.

16. Verfahren nach einem der vorangehenden Ansprüche, wobei das zusammengesetzte Bild Information in einer Datenbank zugeordnet ist, wobei die zugeordnete Information in der Datenbank zusammen mit dem zusammengesetzten Bild von dem Server (120) an den Browser (105) über das Netzwerk (110) als eine Fotoprobe übermittelt wird.

17. Verfahren nach Anspruch 16, wobei die Fotoprobe über ein Netzwerk (110) zu einer bestimmten e-mail-Adresse gesandt wird.

18. Verfahren nach Anspruch 16, wobei eine URL, welche die Fotoprobe enthält, über das Netzwerk (110) an eine bestimmte e-mail-Adresse gesandt wird.

19. Verfahren nach einem der Ansprüche 16 bis 18, wobei ein Benutzer die Ansicht der Fotoprobe vergrößert (Zoom In).

20. Verfahren nach einem der Ansprüche 16 bis 18, wobei ein Benutzer die Ansicht der Fotoprobe verkleinert (Zoom Out).

21. Verfahren nach einem der vorangehenden Ansprüche, umfassend ein netzwerk-basiertes Verfahren zum Erzeugen eines zusammengesetzten Bildes, wobei das automatische Erzeugen eines zusammengesetzten Bildes aus dem ersten Bild und dem zweiten Bild bei dem Server (120) den Empfang des ersten Bildes und des zweiten Bildes bei dem Server (120) von dem Browser (105) abhängig von einer Benutzerauswahl des ersten und des zweiten Bildes umfaßt.

22. Verfahren nach Anspruch 21, mit den Schritten des Empfangens von Relativpositions-Informationen von dem Browser (105) über das Netzwerk (110) und des automatischen Erzeugens des zusammengesetzten Bildes aus dem ersten Bild und dem zweiten Bild bei dem Server (120) abhängig von der Relativpositions-Information.

23. Verfahren nach einem der Ansprüche 21 und 22, mit den weiteren Schritten des Empfangens von Filterinformation von einem Client über das Netzwerk (110) und des automatischen Erzeugens des zusammengesetzten Bildes bei dem Server (120) abhängig von der Filterinformation, um ein Erscheinungsbild des zweiten Bildes, so wie es gemäß einem Herstellungsprozeß, der einer Filterauswahl zugeordnet ist, auf das erste Bild aufgebracht wird, zu simulieren.

24. Verfahren nach einem der Ansprüche 1 bis 20, umfassend ein netzwerkbasiertes Verfahren zum Erzeugen eines zusammengesetzten Bildes, wobei
das Darstellen eines ersten Bildes über eine Web-Schnittstelle, die auf einem Browser (105) dargestellt wird, das Darstellen eines ersten Bildes für eine Benutzerauswahl umfaßt;
das Darstellen eines zweiten Bildes über eine Web-Schnittstelle, die auf dem Browser (105) dargestellt wird, das Hochladen eines zweiten Bildes von einer Kundendatenbank umfaßt; und wobei
das Übermitteln des zusammengesetzten Bildes von dem Server (120) zu dem Browser (105) über das Netzwerk (110) das Empfangen eines zusammengesetzten Bildes aus dem ersten Bild und dem zweiten Bild von dem Server (120) bei dem Browser (105) mittels Darstellung des zusammengesetzten Bildes über eine zweite Web-Schnittstelle, die auf dem Browser (105) dargestellt wird, umfaßt.

25. Verfahren nach einem der Ansprüche 1 bis 20, umfassend ein netzwerkbasiertes Verfahren zum Erzeugen eines zusammengesetzten Bildes, wobei
das Darstellen eines ersten Bildes über eine Web-Schnittstelle, die auf einem Browser (105) dargestellt wird, das Darstellen eines ersten Bildes für eine Benutzerauswahl umfaßt;
das Darstellen eines zweiten Bildes über eine Web-Schnittstelle, die auf dem Browser (105) dargestellt wird, das Darstellen eines zweiten Bildes für eine Benutzerauswahl über eine zweite Web-Schnittstelle, die auf dem Browser (105) dargestellt wird, umfaßt, und wobei
das Übertragen des zusammengesetzten Bildes von dem Server (120) zu dem Browser (105) über das Netzwerk (110) das Empfangen eines zusammengesetzten Bildes aus dem ersten Bild und dem zweiten Bild von dem Server (120) bei dem Browser (105) über das Netzwerk (110) und das Anzeigen des zusammengesetzten Bildes über eine dritte Web-Schnittstelle, die auf dem Browser (105) dargestellt wird, umfaßt.

26. Vorrichtung zum Erzeugen eines zusammengesetzten Bildes, mit folgenden Merkmalen:
Mittel zum Darstellen des ersten Bildes über eine Web-Schnittstelle, die auf einem Browser (105) dargestellt wird, wobei das erste Bild aus einer Produktbilddatei erzeugt wird, die ferner ein Wölbungsverhältnis umfaßt, wobei das Wölbungsverhältnis sich auf Produktbildtopographie bezieht;
Mittel zum Darstellen eines zweiten Bildes über eine Web-Schnittstelle, die auf dem Browser (105) dargestellt wird;
Mittel zum Übertragen einer Auswahl des ersten Bildes und des zweiten Bildes zu einem Server (120) über ein Netzwerk (110);
Mittel zum automatischen Erzeugen eines zusammengesetzten Bildes aus dem ersten Bild und dem zweiten Bild auf dem Server (120), wobei das automatische Erzeugen des zusammengesetzten Bildes das Plazieren des zweiten Bildes auf dem ersten Bild abhängig von dem Wölbungsverhältnis umfaßt; und
Mittel zum Übertragen des zusammengesetzten Bildes von dem Server (120) zu dem Browser (105) über das Netzwerk (110).

27. Vorrichtung nach Anspruch 26, wobei das erste Bild ein Produktbild ist.

28. Vorrichtung nach Anspruch 26 oder 27, wobei das zweite Bild ein dekoratives Bild aus einer Gruppe von Bildern ist, welche ein Logo-Bild und ein Text-Bild umfassen.

29. Vorrichtung nach einem der Ansprüche 26 bis 28, wobei die Mittel zum automatischen Erzeugen eines zusammengesetzten Bildes ferner dazu konfiguriert sind, das zusammengesetzte Bild gemäß Bilderinformation zu erzeugen, um ein Erscheinungsbild des zweiten Bildes zu simulieren, so wie es gemäß einem Herstellungsprozeß, welcher der Filterinformation zugeordnet ist, auf das erste Bild aufgebracht wird.

30. Vorrichtung nach einem der Ansprüche 26 bis 29, wobei die Mittel zum automatischen Erzeugen eines zusammengesetzten Bildes ferner dazu konfiguriert sind, das zusammengesetzte Bild gemäß Wölbungsinformation zu erzeugen, um eine Krümmung des zweiten Bildes, so wie es auf das erste Bild aufgebracht wird, zu simulieren.

31. Vorrichtung nach einem der Ansprüche 26 bis 30, wobei die Mittel zum automatischen Erzeugen eines zusammengesetzten Bildes ferner dazu konfiguriert sind, eine Fotoprobe zu erzeugen.

32. Vorrichtung nach Anspruch 31, wobei die Mittel zum automatischen Erzeugen eines zusammengesetzten Bildes ferner dazu konfiguriert sind, die Fotoprobe über das Netzwerk (110) an eine bestimmte E-mail-Adresse zu übertragen.

33. Vorrichtung nach einem der Ansprüche 26 bis 28 zum Erzeugen eines zusammengesetzten Bildes, mit folgenden Merkmalen:
eine erste Bilddatenbank, wobei die erste Bilddatenbank wenigstens eine erste Bilddatei speichert;
eine zweite Bilddatenbank, wobei die zweite Bilddatenbank wenigstens eine zweite Bilddatei speichert;
ein Server (120) zum Empfangen einer Benutzerauswahl aus der ersten Bilddatei und der zweiten Bilddatei und zum Erzeugen eines zusammengesetzten Bildes aus einem ersten Bild und aus einem zweiten Bild, wobei das zweite Bild relativ zu dem ersten Bild positioniert wird.

34. Vorrichtung nach Anspruch 33, wobei der Server (120) ferner dazu konfiguriert ist, ein zusammengesetztes Bild gemäß Filterinformation zu erzeugen, um ein Erscheinungsbild des zweiten Bildes, so wie es auf das erste Bild aufgebracht wird, gemäß einem Herstellungsprozeß, welcher der Filterinformation zugeordnet ist, zu simulieren.

35. Vorrichtung nach Anspruch 33 oder 34, wobei der Server (120) ferner dazu konfiguriert ist, das zusammengesetzte Bild gemäß der Wölbungsinformation zu erzeugen, um eine Krümmung des zweiten Bildes, so wie es auf das erste Bild aufgebracht wird, zu simulieren.

36. Vorrichtung nach einem der Ansprüche 33 bis 35, wobei der Server (120) ferner dazu konfiguriert ist, eine Fotoprobe zu erzeugen.

37. Vorrichtung nach Anspruch 36, wobei der Server (120) ferner dazu konfiguriert ist, die Fotoprobe über das Netzwerk (120) an eine bestimmte E-mail-Adresse zu übertragen.

38. Verfahren nach einem der Ansprüche 1 bis 20, mit den weiteren Schritten:
automatisches Berechnen eines Stickereipreises des zusammengesetzten Bildes, wobei der Stickereipreis einen geschätzten Preis für das Aufbringen eines Designs, welches durch das zweite Bild dargestellt wird, auf ein Produkt, welches durch das erste Bild dargestellt wird, umfaßt; und
Übertragen des zusammengesetzten Bildes zusammen mit dem berechneten Stickereipreis von dem Server (120) an den Browser (105) über das Netzwerk (110).

39. Verfahren nach Anspruch 38, wobei das automatische Berechnen des Stickereipreises das Berechnen des zweiten Bildbereichs umfaßt.

40. Verfahren nach Anspruch 39, wobei das automatische Berechnen des Stickereipreises des zusammengesetzten Bildes ferner das Multiplizieren des zweiten Bildbereichs mit einer mittleren Anzahl von Stichen in einem vordefinierten Bereich umfaßt.

41. Verfahren nach Anspruch 40, wobei die mittlere Anzahl der Stiche in dem vordefinierten Bereich in einer Produktbilddatei gespeichert wird.

42. Verfahren nach Anspruch 40, wobei die mittlere Anzahl der Stiche in dem vordefinierten Bereich durch einen Benutzer modifizierbar ist.

43. Verfahren nach Anspruch 39, wobei das automatische Berechnen des Stickereipreises des zusammengesetzten Bildes ferner die Verwendung eines Stickereipreises für eine Anzahl von Stichen in einem vordefinierten Bereich umfaßt.

44. Verfahren nach Anspruch 1, wobei das Wölbungsverhältnis eine Zylinderwölbung vorsieht.

45. Verfahren nach Anspruch 1, wobei das Wölbungsverhältnis eine Kugelwölbung vorsieht.

46. Verfahren nach Anspruch 1, wobei das Wölbungsverhältnis ferner so definiert ist, daß es eine wellenförmige Produktbildtopographie berücksichtigt.

47. Verfahren nach Anspruch 1, wobei das Wölbungsverhältnis ferner so definiert ist, daß es eine kubistische Produktbildtopographie berücksichtigt.

48. Verfahren nach Anspruch 1, wobei das Wölbungsverhältnis gestützt auf den Durchmesser eines Produkts automatisch berechnet wird.

## Revendications

1. Procédé de génération d'une image composite comprenant :
présenter une première image par une interface Web présentée sur un navigateur (105), la première image étant produite à partir d'un fichier d'images de produits comprenant en outre un taux de déformation, le taux de déformation se référant à une topographie d'image du produit ;
présenter une seconde image par une interface Web présentée sur le navigateur (105) ;
communiquer une sélection de la première image et de la seconde image à un serveur (120) par un réseau (110) ;
générer automatiquement une image composite de la première image et de la seconde image au niveau du serveur (120), la génération automatique de l'image composite incluant le placement de la seconde image sur la première image en accord avec le taux de déformation ; et
communiquer l'image composite à partir du serveur (120) vers le navigateur (105) par l'intermédiaire du réseau (110).

2. Procédé selon la revendication 1, dans lequel la première image est une image de produit.

3. Procédé selon la revendication 1 ou 2, dans lequel la seconde image est une image décorative incluant l'une quelconque d'un groupe d'images incluant une image de logo et une image de texte.

4. Procédé selon l'une quelconque des revendications précédentes, dans lequel l'image composite inclut la seconde image placée à une position par défaut sur la première image.

5. Procédé selon l'une quelconque des revendications précédentes, comprenant en outre :
positionner la seconde image par rapport à la première image par une interface Web présentée sur le navigateur pour produire des informations de positionnement relatif ;
communiquer les informations de positionnement relatif au serveur (120) par l'intermédiaire du réseau (110) ; et
produire automatiquement l'image composite de la première image et de la seconde image au niveau du serveur (120) en fonction des informations de positionnement relatif.

6. Procédé selon la revendication 5, dans lequel le positionnement de la seconde image par rapport à la première image comprend en outre une sélection d'un emplacement sur une grille de positionnement par l'intermédiaire d'une interface Web présentée sur le navigateur (105), la sélection produisant les informations de positionnement relative.

7. Procédé selon l'une quelconque des revendications précédentes, dans lequel l'image composite comprend en outre un filtrage pour simuler l'aspect de la seconde image telle qu'appliquée sur la première image selon un processus de fabrication associé à une sélection de filtre.

8. Procédé selon l'une quelconque des revendications précédentes, comprenant en outre :
sélectionner un filtre par l'intermédiaire d'une interface Web présentée sur le navigateur (105), la sélection du filtre produisant des informations de filtrage ;
communiquer les informations de filtrage au serveur (120) par l'intermédiaire du réseau (110) ;
produire automatiquement l'image composite au niveau du serveur (120) en fonction des informations de filtrage pour simuler l'aspect de la seconde image telle qu'appliquée à la première image en fonction du processus de fabrication associé au filtre.

9. Procédé selon la revendication 8, dans lequel la sélection du filtre est une broderie.

10. Procédé selon la revendication 9, comprenant en outre un calcul automatique d'un nombre de points.

11. Procédé selon la revendication 8, dans lequel la sélection du filtre est de la sérigraphie.

12. Procédé selon l'une quelconque des revendications précédentes, dans lequel l'image composite comprend en outre une déformation pour simuler la courbure de la seconde image telle qu'appliquée à la première image.

13. Procédé selon la revendication 12, dans lequel la déformation est déterminée en accord avec le taux de déformation.

14. Procédé selon la revendication 12 ou 13, dans lequel la déformation simule la courbure sphérique de la seconde image appliquée à la première image.

15. Procédé selon la revendication 12 ou 13, dans lequel la déformation simule la courbure cylindrique de la seconde image appliquée à la première image.

16. Procédé selon l'une quelconque des revendications précédentes, dans lequel l'image composite est associée à des informations dans une base de données, les informations associées dans la base de données étant communiquées avec l'image composite à partir du serveur (120) vers le navigateur (105) par l'intermédiaire du réseau (110) en tant qu'échantillon photo.

17. Procédé selon la revendication 16, dans lequel l'échantillon photo est envoyé par le réseau (110) à une adresse courriel spécifiée.

18. Procédé selon la revendication 16, dans lequel un URL contenant l'échantillon photo est envoyé par le réseau (110) a une adresse courriel spécifiée.

19. Procédé selon l'une quelconque des revendications 16 à 18, dans lequel un utilisateur effectue un agrandissement de l'échantillon photo.

20. Procédé selon l'une quelconque des revendications 16 à 18, dans lequel un utilisateur effectue une réduction de l'échantillon photo.

21. Procédé selon l'une quelconque des revendications précédentes, comprenant un procédé à base de réseau pour produire une image composite, dans lequel la génération automatique d'une image composite de la première image et de la seconde image au niveau du serveur (120) inclut la réception de la première image et de la seconde image au niveau du serveur (120) à partir du navigateur (105) en réponse à une sélection par l'utilisateur de la première image et de la seconde image.

22. Procédé selon la revendication 21, comprenant la réception d'informations de positionnement relatif à partir du navigateur (105) par le réseau (110) et la génération automatique de l'image composite de la première image et de la seconde image au niveau du serveur en accord avec les informations de positionnement relatif.

23. Procédé selon la revendication 21 ou 22, incluant la réception d'informations de filtrage à partir d'un client par l'intermédiaire du réseau (110) et la génération automatique de l'image composite au niveau du serveur (120) incluant les informations de filtrage pour simuler l'aspect de la seconde image telle qu'appliquée à la première image en accord avec un processus de fabrication associé à une sélection de filtre.

24. Procédé selon l'une des revendications 1 à 20, incluant un procédé utilisant un réseau pour produire une image composite, dans lequel :
la présentation d'une première image par une interface Web présentée sur un navigateur (105) inclut la présentation d'une première image pour sélection par l'utilisateur ;
la présentation d'une seconde image par une interface Web présentée sur le navigateur (105) inclut la mise à jour d'une seconde image à partir d'une base de données de clients ;
et :
la communication de l'image composite à partir du serveur (120) vers le navigateur (105) par le réseau (110) inclut la réception d'une image composite de la première image et de la seconde image, à partir du serveur (120) au niveau du navigateur (105) par l'intermédiaire de l'affichage de l'image composite par une seconde interface Web présentée sur le navigateur (105).

25. Procédé selon l'une des revendications 1 à 20, incluant un procédé utilisant un réseau pour produire une image composite, dans lequel :
la présentation d'une première image par une interface Web présentée sur un navigateur (105) inclut la présentation d'une première image pour sélection par l'utilisateur ;
la présentation d'une seconde image par une interface Web présentée sur le navigateur (105) inclut la présentation d'une seconde image pour sélection par l'utilisateur par une seconde interface Web présentée sur le navigateur (105) ; et
la communication de l'image composite à partir du serveur (120) vers le navigateur (105) par le réseau (110) inclut la réception d'une image composite de la première image et de la seconde image, à partir du serveur (120) au niveau du navigateur (105) par l'intermédiaire du réseau (110) ; et l'affichage de l'image composite par une seconde interface Web présentée sur le navigateur (105).

26. Dispositif de génération d'une image composite comprenant :
des moyens pour présenter une première image par une interface Web présentée sur un navigateur (105), la première image étant produite à partir d'un fichier d'images de produits comprenant en outre un taux de déformation, le taux de déformation se référant à une topographie d'image du produit ;
des moyens pour présenter une seconde image par une interface Web présentée sur le navigateur (105) ;
des moyens pour communiquer une sélection de la première image et de la seconde image à un serveur (120) par un réseau (110) ;
des moyens pour générer automatiquement une image composite de la première image et de la seconde image au niveau du serveur (120), la génération automatique de l'image composite incluant le placement de la seconde image sur la première image en accord avec le taux de déformation ; et
des moyens pour communiquer l'image composite à partir du serveur (120) vers le navigateur (105) par l'intermédiaire du réseau (110).

27. Dispositif selon la revendication 26, dans lequel la première image est une image de produit.

28. Dispositif selon la revendication 26 ou 27, dans lequel la seconde image est une image décorative incluant l'une quelconque d'un groupe d'images incluant une image de logo et une image de texte.

29. Dispositif selon l'une des revendications 26 à 28, dans lequel les moyens de génération automatique d'une image composite sont en outre agencés pour produire l'image composite en accord avec des informations de filtrage pour simuler l'aspect de la seconde image telle qu'appliquée à la première image selon un procédé de fabrication associé aux informations de filtrage.

30. Dispositif selon l'une des revendications 26 à 29, dans lequel les moyens de génération automatique d'une image composite sont en outre agencés pour produire l'image composite en accord avec les informations de déformation pour simuler la courbure de la seconde image telle qu'appliquée à la première image.

31. Dispositif selon l'une des revendications 26 à 30, dans lequel les moyens de génération automatique d'une image composite sont en outre agencés pour produire un échantillon photo.

32. Dispositif selon la revendication 31, dans lequel les moyens de génération automatique d'une image composite sont en outre agencés pour transmettre l'échantillon photo par le réseau (110) vers une adresse courriel spécifiée.

33. Dispositif selon l'une des revendications 26 à 28, de génération automatique d'une image composite, comprenant :
une première base de données d'images, la première base de données d'images étant destinée à mémoriser au moins un premier fichier d'images,
une deuxième base de données d'images, la deuxième base de données d'images étant destinée à mémoriser au moins un second fichier d'images ; et
un serveur (120) pour recevoir une sélection par un utilisateur du premier fichier d'images et du second fichier d'images et pour produire une image composite d'une première image et d'une seconde image, la seconde image étant positionnée par rapport à la première image.

34. Dispositif selon la revendication 33, dans lequel le serveur (120) est en outre agencé pour produire l'image composite en accord avec des informations de filtrage pour simuler l'aspect de la seconde image telle qu'appliquée à la première image en fonction du processus de fabrication associé aux informations de filtrage.

35. Dispositif selon la revendication 33 ou 34, dans lequel le serveur (120) est en outre agencé pour produire l'image composite en accord avec des informations de déformation pour simuler la courbure de la seconde image telle qu'appliquée à la première image.

36. Dispositif selon l'une des revendications 33 à 35, dans lequel le serveur (120) est en outre agencé pour produire un échantillon photo.

37. Dispositif selon la revendication 36, dans lequel le serveur (120) est en outre agencé pour transmettre l'échantillon photo par le réseau (110) à une adresse courriel spécifiée.

38. Procédé selon l'une des revendications 1 à 20, comprenant en outre :
calculer automatiquement un prix de broderie de l'image composite, le prix de broderie comprenant un prix estimé pour l'application d'un dessin représenté par la seconde image à un produit représenté par la première image ; et
communiquer l'image composite avec le prix de broderie calculé à partir du serveur (120) vers le navigateur (105) par le réseau (110).

39. Procédé selon la revendication 38, dans lequel le calcul automatique du prix de broderie comprend le calcul de la surface de la seconde image.

40. Procédé selon la revendication 39, dans lequel le calcul automatique du prix de broderie de l'image composite comprend en outre la multiplication de la surface de la seconde image par un nombre moyen de points dans une surface prédéfinie.

41. Procédé selon la revendication 40, dans lequel le nombre moyen de points dans la surface prédéfinie est mémorisé dans un fichier d'images de produits.

42. Procédé selon la revendication 40, dans lequel le nombre moyen de points dans la surface prédéfinie est modifiable par un utilisateur.

43. Procédé selon la revendication 39, dans lequel le calcul automatique du prix de broderie de l'image composite comprend en outre l'utilisation d'un prix de broderie d'un nombre de points dans une surface prédéfinie.

44. Procédé selon la revendication 1, dans lequel le taux de déformation fournit une déformation cylindrique.

45. Procédé selon la revendication 1, dans lequel le taux de déformation fournit une déformation sphérique.

46. Procédé selon la revendication 1, dans lequel le taux de déformation est en outre défini pour traiter une topographie ondulante d'image de produit.

47. Procédé selon la revendication 1, dans lequel le taux de déformation est en outre défini pour traiter une topographie cubique d'image de produit.

48. Procédé selon la revendication 1, dans lequel le taux de déformation est calculé automatiquement en fonction du diamètre d'un produit.
